# EUROPEAN PATENT APPLICATION

(11) **EP 3 383 125 A1**
(43) Date of publication of application: **03.10.2018**
(21) Application number: 15911072.5
(22) Date of filing: 22.12.2015
(51) Int. Cl.: H04W 76/04, H04W 74/08, H04W 36/02

(54) **DATA TRANSMISSION PROCESSING METHOD, USER EQUIPMENT AND BASE STATION**

(71) Applicant: Huawei Technologies Co., Ltd., Longgang District Shenzhen, Guangdong 518129 (CN)
(72) Inventor: CHANG, Junren, Shenzhen Guangdong 518129 (CN); FENG, Shulan, Shenzhen Guangdong 518129 (CN); XIA, Jinhuan, Shenzhen Guangdong 518129 (CN); YANG, Xiaodong, Shenzhen Guangdong 518129 (CN); GAO, Yongqiang, Shenzhen Guangdong 518129 (CN); QUAN, Wei, Shenzhen Guangdong 518129 (CN)
(74) Representative: Maiwald Patent- und Rechtsanwaltsgesellschaft mbH
(86) International application number: PCT/CN2015/098332
(87) International publication number: WO 2017/107073

(57) **Abstract**

The present invention provides a data transmission processing method, user equipment, and a base station. The method includes: receiving context information saving indication information sent by a base station, and saving context information of user equipment according to the context information saving indication information; determining that the user equipment is in a state related to triggering of RRC connection re-establishment or triggering of RRC connection establishment; and triggering an RRC connection re-establishment process or an RRC connection establishment process when the user equipment has uplink and/or downlink to-be-transmitted data, to transmit the to-be-transmitted data on a re-established RRC connection or an established RRC connection by using the context information of the user equipment. The RRC connection re-establishment process or the RRC connection establishment process is reused to quickly resume data transmission. In addition, because an RRC connection re-establishment process or an RRC connection establishment process in an LTE specification is reused, the user equipment does not need to make a complex change, and is easy to implement.

## Description

### TECHNICAL FIELD

Embodiments of the present invention relate to the field of communications technologies, and in particular, to a data transmission processing method, user equipment, and a base station.

### BACKGROUND

In a current Long Term Evolution (Long Term Evolution, LTE for short) system, user equipment (User Equipment, UE for short) is usually in an idle mode (idle mode) when no service needs to be transmitted. When a service needs to be transmitted, the UE needs to change into a connected mode from the idle mode before performing service transmission.

Each time when the UE has data that needs to be transmitted, the UE needs to perform massive procedures of message exchange with network-side devices, to be connected to an LTE system to transmit data. The network-side devices mainly include an access network device, for example, a base station such as an evolved NodeB (eUTRAN NodeB, eNB for short), and core network devices such as a mobility management entity (Mobility Management Entity, MME for short) and a serving gateway (Serving GateWay, SGW for short). To reduce overheads of message signaling in the foregoing message exchange procedures, and in particular, radio resource control (Radio Resource Control, RRC for short) signaling, access-layer context information (referred to as context information below), and in particular, some UE-specific access-layer parameters, may be saved in the UE or the eNB.

Currently, context information saving and data transmission resumption of UE are controlled by introducing a new RRC connection suspension procedure and a new RRC connection resumption procedure. In brief, the control process includes: When a time in which the UE has no data that needs to be transmitted reaches a specified time, an eNB performs a processing process of suspending (suspend) an RRC connection of the UE, including message exchange between the eNB, an MME, and an SGW, so as to de-activate context information of the UE and release a radio bearer of the UE. Then, the eNB sends an RRC connection suspension message to the UE, to instruct the UE to save related context information. In addition, the RRC connection suspension message may also include a piece of flag information for context information resumption. After a period of time, if the UE has uplink or downlink data that needs to be transmitted, an RRC connection resumption process needs to be performed. The resumption process includes not only a random access process, but also interaction processes such as sending, by the UE to the eNB, an RRC connection resumption request that carries parameters such as an authentication token (Auth token), a bearer identifier (Bearer ID), and an establishment cause (establ cause) of the UE and flag identification information providing a previous network configuration, and feeding back, by the eNB to the UE, an RRC connection resumption message carrying bearer description information (Bearer description) and a bearer identifier (Bearer ID), to instruct the UE to resume data transmission. Implementation of the RRC connection resumption process requires, especially for the UE, design of a new interaction procedure or addition of an interaction procedure to the existing LTE related processing procedure. This process is incompatible with the existing LTE procedure; consequently, resumption of data transmission is slow and relatively complex to implement.

### SUMMARY

Embodiments of the present invention provide a data transmission processing method, user equipment, and a base station, to quickly and easily resume data transmission of UE by using context information of the UE.

A first aspect of the present invention provides a data transmission processing method, where the method is executed by user equipment served by a base station, and the method includes:
receiving context information saving indication information sent by the base station, and saving context information of the user equipment according to the context information saving indication information;
determining that the user equipment is in a state related to triggering of radio resource control RRC connection re-establishment or triggering of RRC connection establishment; and
triggering an RRC connection re-establishment process or an RRC connection establishment process when the user equipment has uplink and/or downlink to-be-transmitted data, to transmit the to-be-transmitted data by using the saved context information and a re-established RRC connection or an established RRC connection.

With reference to the first aspect, in a first possible implementation of the first aspect, the determining that the user equipment is in a state related to triggering of radio resource control RRC connection re-establishment or triggering of RRC connection establishment includes:
determining that the user equipment is in a radio link failure RLF state.

With reference to the first aspect, in a second possible implementation of the first aspect, the determining that the user equipment is in a state related to triggering of radio resource control RRC connection re-establishment or triggering of RRC connection establishment includes:
determining that the user equipment is in a state of being timing synchronized with the base station; and
when the user equipment has the to-be-transmitted data, determining that the user equipment is in an RLF state.

With reference to the first aspect, in a third possible implementation of the first aspect, the determining that the user equipment is in a state related to triggering of radio resource control RRC connection re-establishment or triggering of RRC connection establishment includes:
determining that the user equipment is in an RRC connection re-establishment initialization state and performing a cell selection or re-selection process based on the RRC connection re-establishment initialization state.

With reference to the first aspect, in a fourth possible implementation of the first aspect, the determining that the user equipment is in a state related to triggering of radio resource control RRC connection re-establishment or triggering of RRC connection establishment includes:
determining that the user equipment is in an RRC connection establishment initialization state and performing a cell selection or re-selection process based on the RRC connection establishment initialization state, or determining that the user equipment is in a cell selection or re-selection process.

With reference to the first or second possible implementation of the first aspect, in a fifth possible implementation of the first aspect, the triggering an RRC connection re-establishment process or an RRC connection establishment process when the user equipment has uplink and/or downlink to-be-transmitted data includes:
determining whether a current serving cell of the user equipment meets a preset communication requirement; and
if the current serving cell meets the preset communication requirement, when the user equipment has the to-be-transmitted data, sending an RRC connection re-establishment request or an RRC connection establishment request to the base station by using the current serving cell; or
if the current serving cell does not meet the preset communication requirement, performing a cell selection or re-selection process, and when a base station corresponding to a selected cell is the base station and the user equipment has the to-be-transmitted data, sending an RRC connection re-establishment request or an RRC connection establishment request to the base station by using the selected cell.

With reference to the third possible implementation of the first aspect, in a sixth possible implementation of the first aspect, the triggering an RRC connection re-establishment process or an RRC connection establishment process when the user equipment has uplink and/or downlink to-be-transmitted data includes:
when the user equipment has the to-be-transmitted data, sending an RRC connection re-establishment request to the base station by using a selected cell.

With reference to the fourth possible implementation of the first aspect, in a seventh possible implementation of the first aspect, the triggering an RRC connection re-establishment process or an RRC connection establishment process when the user equipment has uplink and/or downlink to-be-transmitted data includes:
when the user equipment has the to-be-transmitted data, sending an RRC connection establishment request to the base station by using a selected cell.

With reference to any one of the first aspect to the seventh possible implementation of the first aspect, in an eighth possible implementation of the first aspect, before the triggering an RRC connection re-establishment process or an RRC connection establishment process when the user equipment has uplink and/or downlink to-be-transmitted data, the method further includes:
starting a first timer, and after the first timer expires, releasing the context information.

With reference to the eighth possible implementation of the first aspect, in a ninth possible implementation of the first aspect, the starting a first timer, and after the first timer expires, releasing the context information includes:
performing a cell selection or re-selection process within a time period corresponding to the first timer, and selecting a cell; and
if no cell is selected within the time period corresponding to the first timer, releasing the context information.

With reference to any one of the third to the ninth possible implementations of the first aspect, in a tenth possible implementation of the first aspect, the performing a cell selection or re-selection process includes:
starting a second timer, and within an i^{th} time period corresponding to the second timer, suspending or stopping the second timer if a first cell is selected; and
after the second timer is suspended or stopped, if the first cell is no longer a proper cell, resetting and restarting the second timer, and selecting a second cell within an (i+1-n)^{th} time period, where i is an integer ranging from 1 to n, and n is an integer greater than 1.

With reference to any one of the fifth to the tenth possible implementations of the first aspect, in an eleventh possible implementation of the first aspect, the sending an RRC connection re-establishment request to the base station includes:
obtaining uplink timing advance information and/or an uplink transmission resource; and
adjusting uplink transmit timing based on the uplink timing advance information, and/or sending an RRC connection re-establishment request to the base station by using the uplink transmission resource, where the RRC connection re-establishment request includes any one of identification information of the user equipment, a short message authentication code for integrity short MAC-I, and re-establishment cause indication information, and the re-establishment cause indication information is used to instruct the user equipment to resume data transmission by using the saved context information.

With reference to the eleventh possible implementation of the first aspect, in a twelfth possible implementation of the first aspect, the method further includes:
receiving an RRC connection re-establishment message sent by the base station, where the connection re-establishment message includes radio resource configuration information and security key information; and
performing corresponding resource configuration based on the radio resource configuration information, and determining to restore a data radio bearer DRB.

With reference to the twelfth possible implementation of the first aspect, in a thirteenth possible implementation of the first aspect, the method further includes:
sending, to the base station, an RRC connection re-establishment complete message encrypted based on the security key information, where the RRC connection re-establishment complete message includes the to-be-transmitted data.

With reference to any one of the third to the thirteenth possible implementations of the first aspect, in a fourteenth possible implementation of the first aspect, the method further includes:
if it is determined that the user equipment is in the RRC connection re-establishment initialization state, when the user equipment has the to-be-transmitted data or the user equipment sends the RRC connection re-establishment request to the base station, starting a third timer, and stopping the first timer and/or the second timer.

With reference to the fourteenth possible implementation of the first aspect, in a fifteenth possible implementation of the first aspect, the method further includes:
if the RRC connection re-establishment message is received within a time period corresponding to the third timer, stopping recording time of the third timer; or
if the RRC connection re-establishment message is not received within a time period corresponding to the third timer, performing one or more of the following operations:
   entering an RRC idle state;
   stopping the first timer;
   triggering sending of an RRC connection establishment request to the base station corresponding to the cell; and
   triggering cell selection or re-selection, and sending an RRC connection establishment request to the base station corresponding to the selected cell.

With reference to any one of the first aspect to the tenth possible implementation of the first aspect, in a sixteenth possible implementation of the first aspect, the triggering an RRC connection establishment process when the user equipment has uplink and/or downlink to-be-transmitted data includes:
obtaining uplink timing advance information and/or an uplink transmission resource; and
adjusting uplink transmit timing based on the uplink timing advance information, and/or sending an RRC connection establishment request to the base station by using the uplink transmission resource, where the RRC connection establishment request includes identification information of the user equipment.

With reference to the sixteenth possible implementation of the first aspect, in a seventeenth possible implementation of the first aspect, the method further includes:
receiving an RRC connection establishment message sent by the base station, where the RRC connection establishment message includes resumption indication information, and the resumption indication information is used to instruct the user equipment to resume data transmission by using the saved context information; and
sending an RRC connection establishment complete message to the base station.

With reference to the seventeenth possible implementation of the first aspect, in an eighteenth possible implementation of the first aspect, the sending an RRC connection establishment complete message to the base station includes:
sending the RRC connection establishment complete message to the base station, where the RRC connection establishment complete message includes a short MAC-I calculated based on the identification information of the user equipment;
   and/or
obtaining a security key; and
encrypting and/or applying integrity protection on the RRC connection establishment complete message based on the security key, and sending the RRC connection establishment complete message.

With reference to the sixteenth possible implementation of the first aspect, in a nineteenth possible implementation of the first aspect, the sending an RRC connection establishment request to the base station includes:
obtaining a security key; and
encrypting and/or applying integrity protection on the RRC connection establishment request based on the security key, and sending the RRC connection establishment request.

With reference to the eighteenth or nineteenth possible implementation of the first aspect, in a twentieth possible implementation of the first aspect, the obtaining a security key includes:
obtaining a security key in the context information, where the security key includes a message integrity protection key K_{RRCinc}, a message encryption key K_{RRCenc}, and a data encryption key K_{UPenc}; or
the obtaining a security key includes:
   receiving security key indication information sent by the base station, where the security key indication information includes security key update information; and
   updating an intermediate key KeNB based on the security key update information, generating a message integrity protection key K_{RRCinc} based on an updated intermediate key KeNB and an integrity protection algorithm, and generating a message encryption key K_{RRCenc} and a data encryption key K_{UPenc} based on the updated intermediate key KeNB and an encryption algorithm, where
   the security key indication information is carried in any one of the following messages: a key update indication message, a data transmission indication message, an RRC connection establishment message, and a message carrying the UE context saving indication information.

With reference to the eleventh or sixteenth possible implementation of the first aspect, in a twenty-first possible implementation of the first aspect, the obtaining uplink timing advance information and/or an uplink transmission resource includes:
determining whether a current coverage level has changed; and
when the coverage level has changed,
sending a random access request to the base station; and
receiving a random access response message sent by the base station, where the random access response message includes the uplink timing advance information and uplink resource allocation information used to obtain the uplink transmission resource.

With reference to the twenty-first possible implementation of the first aspect, in a twenty-second possible implementation of the first aspect, the method further includes:
when the coverage level has not changed,
obtaining currently locally saved uplink timing advance information as the uplink timing advance information, where
the uplink transmission resource is obtained in any one of the following manners:
   sending a scheduling request resource to the base station, to obtain the uplink transmission resource;
   contending for an uplink shared channel resource, to obtain the uplink transmission resource; and
   obtaining a resource preconfigured for the user equipment by the base station, as the uplink transmission resource.

With reference to any one of the first aspect to the twenty-second possible implementation of the first aspect, in a twenty-third possible implementation of the first aspect, the method further includes:
when it is determined that no data needs to be transmitted within a first preset time, sending a context information saving request to the base station, to cause the base station to save the context information.

With reference to any one of the first aspect to the twenty-third possible implementation of the first aspect, in a twenty-fourth possible implementation of the first aspect, the context information saving indication information is sent by the base station based on the context information saving request, or is sent by the base station based on a record of data transmission with the user equipment when it is determined that no data transmission is performed with the user equipment within a second preset time, where the second preset time is equal to or not equal to the first preset time.

With reference to any one of the first aspect to the twenty-fourth possible implementation of the first aspect, in a twenty-fifth possible implementation of the first aspect, the method further includes:
receiving configuration information of a fourth timer sent by the base station, where the fourth timer is configured to time validity of a security key in the context information; and
starting the fourth timer when the context information saving indication information is received.

With reference to any one of the first aspect to the twenty-fifth possible implementation of the first aspect, in a twenty-sixth possible implementation of the first aspect, the context information saving indication information is included in any one of the following indication messages:
a context information saving indication message, an RRC connection suspension indication message, and an RRC connection release indication message.

With reference to any one of the first aspect to the twenty-sixth possible implementation of the first aspect, in a twenty-seventh possible implementation of the first aspect, before the triggering an RRC connection re-establishment process or an RRC connection establishment process when the user equipment has uplink and/or downlink to-be-transmitted data, the method further includes:
performing a cell selection or re-selection process, and if a base station corresponding to a selected cell is different from the base station that sends the context information saving indication information, or a quantity of selected-cell changes is greater than or equal to a preset quantity, determining to trigger an initial RRC connection establishment process when the user equipment has the to-be-transmitted data.

With reference to any one of the first aspect to the twenty-seventh possible implementation of the first aspect, in a twenty-eighth possible implementation of the first aspect, before the triggering an RRC connection re-establishment process or an RRC connection establishment process when the user equipment has uplink and/or downlink to-be-transmitted data, the method further includes:
performing a cell selection or re-selection process, triggering execution of a location update process when it is determined that a track area of a selected cell has changed, and establishing a data radio bearer with a new base station in the location update process.

With reference to the twenty-eighth possible implementation of the first aspect, in a twenty-ninth possible implementation of the first aspect, the method further includes:
receiving, in the location update process or after location update is complete, context information saving indication information sent by the new base station.

A second aspect of the present invention provides a data transmission processing method, where the method is executed by a base station serving user equipment, and the method includes:
determining whether user equipment has not performed data transmission within a preset time; and
sending context information saving indication information to the user equipment when the user equipment has not performed data transmission within the preset time, so that the user equipment saves context information; determining that the user equipment is in a state related to triggering of RRC connection re-establishment or triggering of RRC connection establishment; and triggering an RRC connection re-establishment process or an RRC connection establishment process when there is uplink and/or downlink to-be-transmitted data.

With reference to the second aspect, in a first possible implementation of the second aspect, the method further includes:
sending timer configuration information to the user equipment when the user equipment has not performed data transmission within the preset time, where the timer configuration information includes timer configuration information indicating validity of a security key in the context information and timer configuration information indicating validity of the context information.

With reference to the second aspect, in a second possible implementation of the second aspect, the method further includes:
receiving an RRC connection establishment request sent by the user equipment, where the RRC connection establishment request includes identification information of the user equipment, and the identification information of the user equipment includes an S-TMSI; and
sending an RRC connection establishment message to the user equipment when it is determined, based on the S-TMSI sent in advance by a mobility management entity MME, that the context information is valid, where the RRC connection establishment message includes resumption indication information, and the resumption indication information is used to instruct the user equipment to resume data transmission by using the saved context information.

A third aspect of the present invention provides user equipment, including:
a receiving and saving module, configured to: receive context information saving indication information sent by a base station, and save context information of the user equipment according to the context information saving indication information;
a determining module, configured to determine that the user equipment is in a state related to triggering of radio resource control RRC connection re-establishment or triggering of RRC connection establishment; and
a re-establishment processing module, configured to: trigger an RRC connection re-establishment process or an RRC connection establishment process when the user equipment has uplink and/or downlink to-be-transmitted data, to transmit the to-be-transmitted data by using the saved context information and a re-established RRC connection or an established RRC connection.

With reference to the third aspect, in a first possible implementation of the third aspect, the determining module includes:
a first determining submodule, configured to determine that the user equipment is in a radio link failure RLF state.

With reference to the third aspect, in a second possible implementation of the third aspect, the determining module includes:
a second determining submodule, configured to determine that the user equipment is in a state of being timing synchronized with the base station; and
a third determining submodule, configured to: when the user equipment has the to-be-transmitted data, determine that the user equipment is in an RLF state.

With reference to the third aspect, in a third possible implementation of the third aspect, the determining module includes:
a fourth determining submodule, configured to: determine that the user equipment is in an RRC connection re-establishment initialization state, and perform a cell selection or re-selection process based on the RRC connection re-establishment initialization state.

With reference to the third aspect, in a fourth possible implementation of the third aspect, the determining module includes:
a fifth determining submodule, configured to: determine that the user equipment is in an RRC connection establishment initialization state and perform a cell selection or re-selection process based on the RRC connection establishment initialization state, or determine that the user equipment is in a cell selection or re-selection process.

With reference to any one of the first to the fourth possible implementations of the third aspect, in a fifth possible implementation of the third aspect, the re-establishment processing module further includes:
a judgment submodule, configured to determine whether a current serving cell of the user equipment meets a preset communication requirement;
a sending submodule, configured to: if the current serving cell meets the preset communication requirement, send an RRC connection re-establishment request or an RRC connection establishment request to the base station; and
a selection submodule, configured to: if the current serving cell does not meet the preset communication requirement, perform a cell selection or re-selection process, where
the sending submodule is further configured to: send an RRC connection re-establishment request or an RRC connection establishment request to the base station when a cell is selected and a base station corresponding to the cell is the base station.

With reference to the fifth possible implementation of the third aspect, in a sixth possible implementation of the third aspect, the sending submodule is further configured to:
when the user equipment has the to-be-transmitted data, send an RRC connection re-establishment request to the base station by using a selected cell.

With reference to the fifth possible implementation of the third aspect, in a seventh possible implementation of the third aspect, the sending submodule is further configured to:
when the user equipment has the to-be-transmitted data, send an RRC connection establishment request to the base station by using a selected cell.

With reference to any one of the third aspect to the seventh possible implementation of the third aspect, in an eighth possible implementation of the third aspect, the re-establishment processing module further includes:
a timing control submodule, configured to: start a first timer, and after the first timer expires, release the context information.

With reference to the eighth possible implementation of the third aspect, in a ninth possible implementation of the third aspect,
the selection submodule is configured to: perform a cell selection or re-selection process within a time period corresponding to the first timer, and select a cell; and
the timing control submodule is configured to: if no cell is selected within the time period corresponding to the first timer, release the context information.

With reference to any one of the fifth to the ninth possible implementations of the third aspect, in a tenth possible implementation of the third aspect, the selection submodule is configured to:
start a second timer, and within an i^{th} time period corresponding to the second timer, suspend or stop the second timer if a first cell is selected; and
after the second timer is suspended or stopped, if the first cell is no longer a proper cell, reset and restart the second timer, and select a second cell within an (i+1-n)^{th} time period, where i is an integer ranging from 1 to n, and n is an integer greater than 1.

With reference to any one of the third aspect to the tenth possible implementation of the third aspect, in an eleventh possible implementation of the third aspect, the re-establishment processing module includes:
a first obtaining submodule, configured to obtain uplink timing advance information and/or an uplink transmission resource, where
the sending submodule is configured to: adjust uplink transmit timing based on the uplink timing advance information, and/or send an RRC connection re-establishment request to the base station by using the uplink transmission resource, where the RRC connection re-establishment request includes any one of identification information of the user equipment, a short message authentication code for integrity short MAC-I, and re-establishment cause indication information, and the re-establishment cause indication information is used to instruct the user equipment to resume data transmission by using the saved context information.

With reference to the eleventh possible implementation of the third aspect, in a twelfth possible implementation of the third aspect, the re-establishment processing module further includes:
a receiving submodule, configured to receive an RRC connection re-establishment message sent by the base station, where the connection re-establishment message includes radio resource configuration information and security key information; and
a configuration submodule, configured to: perform corresponding resource configuration based on the radio resource configuration information, and determine to restore a data radio bearer DRB.

With reference to the twelfth possible implementation of the third aspect, in a thirteenth possible implementation of the third aspect, the sending submodule is further configured to send, to the base station, an RRC connection re-establishment complete message encrypted based on the security key information, where the RRC connection re-establishment complete message includes the to-be-transmitted data; and
the sending submodule is further configured to send, to the base station, an RRC connection re-establishment complete message encrypted based on the security key information, where the RRC connection re-establishment complete message includes the to-be-transmitted data.

With reference to any one of the eighth to the thirteenth possible implementations of the third aspect, in a fourteenth possible implementation of the third aspect, the timing control submodule is further configured to:
if it is determined that the user equipment is in the RRC connection re-establishment initialization state, when the user equipment has the to-be-transmitted data or the user equipment sends the RRC connection re-establishment request to the base station, start a third timer, and stop the first timer and/or the second timer.

With reference to the fourteenth possible implementation of the third aspect, in a fifteenth possible implementation of the third aspect, the timing control submodule is further configured to:
if the receiving submodule receives the RRC connection re-establishment message within a time period corresponding to the third timer, stop recording time of the third timer; or
if the receiving submodule does not receive the RRC connection re-establishment message within a time period corresponding to the third timer, perform one or more of the following operations:
   entering an RRC idle state;
   stopping the first timer;
   triggering sending of an RRC connection establishment request to the base station corresponding to the cell; and
   triggering cell selection or re-selection, and sending an RRC connection establishment request to the base station corresponding to the selected cell.

With reference to any one of the third aspect to the tenth possible implementation of the third aspect, in a sixteenth possible implementation of the third aspect, the re-establishment processing module includes:
a second obtaining submodule, configured to obtain uplink timing advance information and/or an uplink transmission resource, where
the sending submodule is further configured to: adjust uplink transmit timing based on the uplink timing advance information, and/or send an RRC connection establishment request to the base station by using the uplink transmission resource, where the RRC connection establishment request includes identification information of the user equipment.

With reference to the sixteenth possible implementation of the third aspect, in a seventeenth possible implementation of the third aspect, the receiving submodule is further configured to:
receive an RRC connection establishment message sent by the base station, where the RRC connection establishment message includes resumption indication information, and the resumption indication information is used to instruct the user equipment to resume data transmission by using the saved context information; and
the sending submodule is further configured to send an RRC connection establishment complete message to the base station.

With reference to the seventeenth possible implementation of the third aspect, in an eighteenth possible implementation of the third aspect, the sending submodule is further configured to send an RRC connection establishment complete message to the base station, where the RRC connection establishment complete message includes a short MAC-I calculated based on the identification information of the user equipment;
and/or
the re-establishment processing module further includes:
a third obtaining submodule, configured to obtain a security key, where
the sending submodule is further configured to: encrypt and/or apply integrity protection on the RRC connection establishment complete message based on the security key, and send the RRC connection establishment complete message.

With reference to the eighteenth possible implementation of the third aspect, in a nineteenth possible implementation of the third aspect, the sending submodule is further configured to: encrypt and/or apply integrity protection on the RRC connection establishment request according to the security key, and send the RRC connection establishment request.

With reference to the eighteenth possible implementation of the third aspect, in a twentieth possible implementation of the third aspect, the third obtaining submodule is specifically configured to:
obtain a security key in the context information, where the security key includes a message integrity protection key K_{RRCinc}, a message encryption key K_{RRCenc}, and a data encryption key K_{UPenc};
   or
the receiving submodule is further configured to receive security key indication information sent by the base station, where the security key indication information includes security key update information; and
the re-establishment processing module further includes:
   an update submodule, configured to update an intermediate key KeNB based on the security key update information; and
   a calculation submodule, configured to: generate a message integrity protection key K_{RRCinc} based on an updated intermediate key KeNB and an integrity protection algorithm, and generate a message encryption key K_{RRCenc} and a data encryption key K_{UPenc} based on the updated intermediate key KeNB and an encryption algorithm, where
   the security key indication information is carried in any one of the following messages: a key update indication message, a data transmission indication message, an RRC connection establishment message, and a message carrying the UE context saving indication information.

With reference to any one of the eleventh to the sixteenth possible implementations of the third aspect, in a twenty-first possible implementation of the third aspect, the first obtaining submodule or the second obtaining submodule includes:
a judgment unit, configured to determine whether a current coverage level has changed;and
a first obtaining unit, configured to: when the coverage level has changed,
send a random access request to the base station; and
receive a random access response message sent by the base station, where the random access response message includes the uplink timing advance information and uplink resource allocation information used to obtain the uplink transmission resource.

With reference to the twenty-first possible implementation of the third aspect, in a twenty-second possible implementation of the third aspect, the first obtaining submodule or the second obtaining submodule module further includes:
a second obtaining unit, configured to: when the coverage level has not changed,
obtain currently locally saved uplink timing advance information as the uplink timing advance information, where
the uplink transmission resource is obtained in any one of the following manners:
   sending a scheduling request resource to the base station, to obtain the uplink transmission resource;
   contending for an uplink shared channel resource, to obtain the uplink transmission resource; and
   obtaining a resource preconfigured for the user equipment by the base station, as the uplink transmission resource.

With reference to any one of the third aspect to the twenty-second possible implementation of the third aspect, in a twenty-third possible implementation of the third aspect, the method further includes:
a sending module, configured to: when it is determined that no data needs to be transmitted within a first preset time, send a context information saving request to the base station, to cause the base station to save the context information.

With reference to any one of the third aspect to the twenty-third possible implementation of the third aspect, in a twenty-fourth possible implementation of the third aspect, the context information saving indication information is sent by the base station based on the context information saving request, or is sent by the base station based on a record of data transmission with the user equipment when it is determined that no data transmission is performed with the user equipment within a second preset time. The second preset time is equal to or not equal to the first preset time.

With reference to any one of the third aspect to the twenty-fourth possible implementation of the third aspect, in a twenty-fifth possible implementation of the third aspect, the receiving module is further configured to: receive configuration information of a fourth timer sent by the base station, and start the fourth timer when receiving the context information saving indication information, where the fourth timer is configured to time validity of a security key in the context information.

With reference to any one of the third aspect to the twenty-fifth possible implementation of the third aspect, in a twenty-sixth possible implementation of the third aspect, the context information saving indication information is included in any one of the following indication messages:
a context information saving indication message, an RRC connection suspension indication message, and an RRC connection release indication message.

With reference to any one of the third aspect to the twenty-sixth possible implementation of the third aspect, in a twenty-seventh possible implementation of the third aspect, the selection submodule is further configured to:
perform a cell selection or re-selection process, and if a base station corresponding to a selected cell is different from the base station that sends the context information saving indication information, or a quantity of selected-cell changes is greater than or equal to a preset quantity, determine to trigger an initial RRC connection establishment process when the user equipment has the to-be-transmitted data.

With reference to any one of the third aspect to the twenty-seventh possible implementation of the third aspect, in a twenty-eighth possible implementation of the third aspect, the selection submodule is further configured to:
perform a cell selection or re-selection process, trigger execution of a location update process when it is determined that a track area of a selected cell has changed, and establish a data radio bearer with a new base station in the location update process.

With reference to the twenty-eighth possible implementation of the third aspect, in a twenty-ninth possible implementation of the third aspect, the receiving and saving module is further configured to:
receive, in the location update process or after location update is complete, context information saving indication information sent by the new base station.

A fourth aspect of the present invention provides a base station, including:
a determining module, configured to determine whether user equipment has not performed data transmission within a preset time; and
a sending module, configured to: when the determining module determines that the user equipment has not performed data transmission within the preset time, send context information saving indication information to the user equipment, so that the user equipment saves context information; determine that the user equipment is in a state related to triggering of RRC connection re-establishment or triggering of RRC connection establishment; and when there is uplink and/or downlink to-be-transmitted data, trigger an RRC connection re-establishment process or an RRC connection establishment process.

With reference to the fourth aspect, in a first possible implementation of the fourth aspect, the sending module is further configured to:
sending timer configuration information to the user equipment when the determining module determines that the user equipment has not performed data transmission within the preset time, where the timer configuration information includes timer configuration information indicating validity of a security key in the context information and timer configuration information indicating validity of the context information.

With reference to the fourth aspect, in a second possible implementation of the fourth aspect, the base station further includes:
a receiving module, configured to receive an RRC connection establishment request sent by the user equipment, where the RRC connection establishment request includes identification information of the user equipment, and the identification information of the user equipment includes an S-TMSI; and
the sending module is further configured to send an RRC connection establishment message to the user equipment when the determining module determines, based on the S-TMSI sent in advance by a mobility management entity MME, that the context information is valid, where the RRC connection establishment message includes resumption indication information, and the resumption indication information is used to instruct the user equipment to resume data transmission by using the saved context information.

According to the data transmission processing method, the user equipment, and the base station that are provided in the present invention, after the user equipment receives the context information saving indication message sent by the base station, the user equipment is forcibly determined to be in the state related to triggering of RRC connection re-establishment or triggering of RRC connection establishment, for example, the RLF state. When there is the data that needs to be transmitted, the RRC connection re-establishment process or the RRC connection establishment process is triggered immediately based on the state related to triggering, to quickly resume data transmission by reusing the RRC connection re-establishment process or the RRC connection establishment process. In addition, because the RRC connection re-establishment process or the RRC connection establishment process in an LTE specification is reused, the user equipment does not need to make a complex change, and is easy to implement.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a data transmission processing method according to an embodiment of the present invention;
FIG. 2 is a flowchart of a cell selection or re-selection process according to an embodiment of the present invention;
FIG. 3 is a flowchart of an RRC connection re-establishment process different from a cell selection or re-selection process according to an embodiment of the present invention;
FIG. 4 is a flowchart of a specific implementation of step 301;
FIG. 5 is a flowchart of an implementation of an RRC connection establishment process different from a cell selection or re-selection process according to an embodiment of the present invention;
FIG. 6A and FIG. 6B are a diagram of signaling interaction of Embodiment 2 of a data transmission processing method according to an embodiment of the present invention;
FIG. 7A and FIG. 7B are a diagram of signaling interaction of Embodiment 3 of a data transmission processing method according to an embodiment of the present invention;
FIG. 8A and FIG. 8B are a diagram of signaling interaction of Embodiment 4 of a data transmission processing method according to an embodiment of the present invention;
FIG. 9A and FIG. 9B are a diagram of signaling interaction of Embodiment 5 of a data transmission processing method according to an embodiment of the present invention;
FIG. 10 is a flowchart of Embodiment 6 of a data transmission processing method according to an embodiment of the present invention;
FIG. 11 is a schematic structural diagram of Embodiment 1 of user equipment according to an embodiment of the present invention;
FIG. 12 is a schematic structural diagram of Embodiment 2 of user equipment according to an embodiment of the present invention;
FIG. 13 is a schematic structural diagram of Embodiment 3 of user equipment according to an embodiment of the present invention;
FIG. 14 is a schematic structural diagram of Embodiment 4 of user equipment according to an embodiment of the present invention;
FIG. 15 is a schematic structural diagram of Embodiment 5 of user equipment according to an embodiment of the present invention;
FIG. 16 is a schematic structural diagram of Embodiment 1 of a base station according to an embodiment of the present invention; and
FIG. 17 is a schematic structural diagram of Embodiment 2 of a base station according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

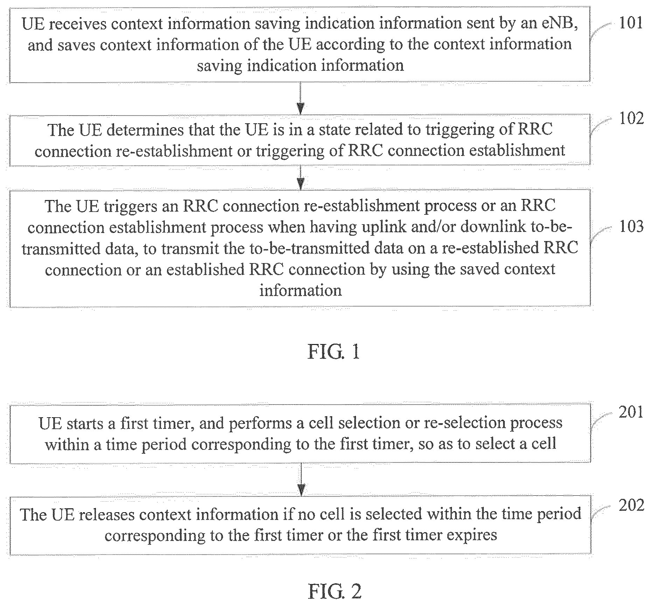

FIG. 1 is a flowchart of Embodiment 1 of a data transmission processing method according to an embodiment of the present invention. A solution of the present invention may be applied to an LTE network, and main related interacting network elements include UE, an eNB, and core network devices, for example, an MME and an SGW. The UE may be UE in a current LTE system, or may be UE in NarrowBand Internet Of Things (NarrowBand Internet of Things, NB-IoT for short).

Currently, 3GPP has set up a new NB-IoT project. An objective of this project is to further extend an LTE system, so as to support massive low-throughput Internet of Things devices or massive Internet of Things devices insensitive to a delay requirement. Ultra-low complexity and ultra-low power consumption are two key requirements for such Internet of Things devices.

This embodiment is described in detail from a perspective of UE, that is, by using UE as an entity to execute the method. As shown in FIG. 1, the data transmission processing method specifically includes the following steps:
Step 101. The UE receives context information saving indication information sent by the eNB, and saves context information of the UE according to the context information saving indication information.
Step 102. The UE determines that the UE is in a state related to triggering of RRC connection re-establishment or triggering of RRC connection establishment.
Step 103. The UE triggers an RRC connection re-establishment process or an RRC connection establishment process when having uplink and/or downlink to-be-transmitted data, to transmit the to-be-transmitted data by using the saved context information and a re-established RRC connection or an established RRC connection.

In this embodiment, the context information saving indication information is sent to the UE by the eNB when the eNB determines that the UE has not transmitted data within a specified time.

The eNB may use the following optional manners to determine that the UE has not transmitted data within the specified time.

Manner 1: In a process in which the UE performs data transmission with a network, if no subsequent data needs to be transmitted within a specified time after current transmission of a piece of data is complete, that is, when it is determined that no data needs to be transmitted within the preset time, the UE sends a context information saving request to the eNB, to cause the eNB to save the context information of the UE, that is, to request the eNB to save the context information of the UE. In this case, the context information saving indication information is sent by the eNB based on the context information saving request. To be specific, when the eNB receives the context information saving request, the eNB determines that the UE has no subsequent data that needs to be transmitted within the time, and may send the context saving indication message to the UE. The context saving indication message carries the context saving indication information.

It should be noted that saving the context information of the UE is saving the context information on a UE side and on a network side, to be specific, the eNB. In addition, during specific implementation, the context information saving request may alternatively be referred to as an RRC connection suspension request message, or the like. The context information saving indication message may alternatively be referred to as an RRC connection suspension indication message, an RRC connection release indication message, or the like. No specific limitation is imposed.

Manner 2: The context information saving indication information is sent by the eNB based on a record of data transmission with the UE when it is determined that no data transmission is performed with the UE within a preset time. In this manner, when determining, depending on a status of data transmission with the UE, that the UE has no subsequent data that needs to be transmitted, the eNB may automatically determine that saving the context information of the UE (or equivalently referred to as RRC connection suspension or release) may be performed, so as to send the context information saving indication information to the UE.

It should be noted that after determining that the UE has not transmitted data within the specified time, the eNB does not immediately send the context saving indication information to the UE, but needs to interact with core network devices, an MME and an SGW, to complete related processing on the network side, for example, UE bearer suspension processing, and sends the context saving indication information to the UE after the related processing is complete. Interaction between the eNB and the core network devices is described in a subsequent embodiment, and details are not described in this embodiment.

Further, after receiving the context saving indication information sent by the eNB, the UE saves the context information. Generally, the context information may include one or more of: radio resource configuration information of the UE, a security algorithm, a UE identifier or the identification information of the UE, and measurement configuration information. The radio resource configuration information may include one or more of: physical layer configuration information, MAC layer configuration information, RLC layer configuration information, and PDCP layer configuration information.

In this embodiment, after saving the context information, the UE immediately forcibly determines the UE to be in a state related to triggering of RRC connection re-establishment or triggering of RRC connection establishment, so as to ensure compatibility with a related processing procedure in an existing LTE specification and reduce UE implementation complexity.

The following several optional implementations may be used by the UE to determine that the UE is in the state related to triggering of RRC connection re-establishment or triggering of RRC connection establishment:
Manner 1: Determine that the UE is in a radio link failure (Radio Link Failure, RLF for short) state.

Specifically, when the UE determines that the context information of the UE needs to be saved or determines that the UE needs to be in an RRC-suspended state, that is, when the context saving indication information sent by the eNB is received, the UE determines that the UE is currently in the RLF state (or referred to as an extended RLF state or a virtual RLF state). The extended or virtual RLF state is intended to distinguish from a trigger cause of an existing RLF state. In this embodiment, the UE is not really in the RLF state at this time, but is forcibly set to the RLF state.

After the UE determines that the UE is in an RLF state, unlike that an RRC connection re-establishment process is triggered immediately when the UE is really in an RLF state, in this embodiment, the UE does not immediately trigger an RRC connection re-establishment process, but triggers the RRC connection re-establishment process when the UE has uplink and/or downlink to-be-transmitted data.

Because the UE is forcibly set to the RLF state at this time, rather than being in a real RLF state, RRC connection re-establishment is not triggered immediately, but triggering of RRC connection re-establishment is deferred to when the UE has data that needs to be transmitted. In this way, when there is data that needs to be transmitted, data transmission is quickly resumed by using an existing RRC connection re-establishment process in LTE.

Manner 2: Determine that the UE is in a state of being timing synchronized with the eNB, and determining that the UE is in an RLF state when the UE has to-be-transmitted data.

Specifically, when determining that the context information of the UE needs to be saved or determining that the UE is in an RRC-suspended state, the UE may further determine that the UE is in a timing-synchronized state, to be specific, in a state of being timing synchronized with the eNB.

Specifically, the UE may start a timer at this time, and the UE may be determined to be in the timing-synchronized state within a time period corresponding to the timer. If the UE has the to-be-transmitted data that needs to be transmitted, the UE immediately determines that the UE is in the RLF state and then triggers an RRC connection re-establishment process.

In this manner, in a general normal process, the UE needs to detect whether the UE is timing synchronized with the eNB, and if timing synchronization is lost, immediately triggers the RRC connection re-establishment process. The UE is forcibly determined to be in the state of being timing synchronized with the eNB, and when there is data that needs to be transmitted, the UE is forcibly determined to be in the RLF state, so as to trigger the RRC connection re-establishment process. In this way, when the UE has data that needs to be transmitted, data transmission can be quickly resumed by triggering an RLF event and reusing an existing RRC connection re-establishment process.

Manner 3: Determine that the UE is in an RRC connection re-establishment initialization state, and perform a cell selection or re-selection process based on the RRC connection re-establishment initialization state.

Specifically, when determining that the context information of the UE needs to be saved or determining that the UE is in an RRC-suspended state, the UE determines that the UE is in the RRC connection re-establishment initialization state. To be specific, the UE determines that an RRC connection re-establishment process needs to be triggered at this time. However, a process that needs to be performed immediately at this time is the cell selection or re-selection process, to be specific, an initialization stage of the RRC connection re-establishment process. Alternatively, optionally, similar to manner 1, the UE first determines to enter the RLF state (or referred to as an extended RLF state or a virtual RLF state), and then determines to trigger an initialization stage of the RRC connection re-establishment process.

In this manner, although the UE immediately triggers the RRC connection re-establishment process after saving the context information, the UE first performs only the cell selection or re-selection process, but does not perform any other RRC connection re-establishment process, and does not trigger a subsequent RRC connection re-establishment processing process, for example, performing random access or sending an RRC connection re-establishment request to the eNB, until the UE has to-be-transmitted data that needs to be transmitted. It should be noted that, in this embodiment, the triggering an RRC connection re-establishment process is mainly sending the RRC connection re-establishment request to the eNB by using a cell selected through the cell selection or re-selection process.

It can be noted that, in this embodiment, for ease of description, the RRC connection re-establishment process is divided into an initialization process, namely, the cell selection or re-selection process, and another RRC connection re-establishment process different from the cell selection or re-selection process. Specific implementation of the two processes is described in detail in subsequent embodiments.

Manner 4: Determine that the UE is in an RRC connection establishment initialization state and perform a cell selection or re-selection process based on the RRC connection establishment initialization state, or determine that the UE is in a cell selection or re-selection process.

Specifically, when determining that the context information of the UE needs to be saved or determining that the UE is in an RRC-suspended state, the UE determines that the UE is in the RRC connection establishment initialization state. To be specific, the UE determines that an RRC connection establishment process needs to be triggered at this time. However, a process that needs to be performed immediately at this time is the cell selection or re-selection process.

In this manner, although the UE immediately triggers the RRC connection establishment process after saving the context information, the UE first performs only the cell selection or re-selection process, but does not perform any other RRC connection establishment process, and does not trigger a subsequent RRC connection establishment processing process, for example, performing random access or sending an RRC connection establishment request to the eNB, until the UE has to-be-transmitted data that needs to be transmitted. It should be noted that, in this embodiment, the triggering an RRC connection establishment process is mainly sending an RRC connection establishment request to the eNB by using a cell selected through the cell selection or re-selection process. In addition, it should be noted that after sending the RRC connection establishment request, the UE may release the saved context information.

It can be understood that, in this embodiment, for ease of description, the RRC connection establishment process is divided into an initialization process, namely, the cell selection or re-selection process, and another RRC connection establishment process different from the cell selection or re-selection process. Specific implementation of the two processes is described in detail in subsequent embodiments.

In this embodiment, after the UE determines the UE to be in a triggering state, in any one of the foregoing optional manners, related to triggering of RRC connection re-establishment or triggering of RRC connection establishment, when the UE has the to-be-transmitted data that needs to be transmitted, a corresponding processing process is triggered. Specifically, for manner 1 and manner 2, when it is determined that the UE is in the RLF state and there is the to-be-transmitted data, the cell selection or re-selection process and the another RRC connection re-establishment process or the another RRC connection establishment process, that is, an entire RRC connection re-establishment process or an entire RRC connection establishment process, is triggered. For manner 3, if it is determined that the UE is in the RRC connection re-establishment initialization state, after the cell selection or re-selection process is performed, the another RRC connection re-establishment process is performed when there is the to-be-transmitted data, that is, the another RRC connection re-establishment process different from the cell selection or re-selection process is triggered. To be specific, the RRC connection re-establishment request is sent to the eNB. For manner 4, if it is determined that the UE is in the RRC connection establishment initialization state, after the cell selection or re-selection process is performed, the another RRC connection establishment process is performed when there is the to-be-transmitted data, that is, the another RRC connection establishment process different from the cell selection or re-selection process is triggered. To be specific, the RRC connection establishment request is sent to the eNB.

Specifically, the UE may use the following optional manner to determine whether there is uplink or downlink to-be-transmitted data:
when determining, according to an indication of an application layer, that there is uplink data arriving or the UE has uplink data that needs to be sent, determining, by the UE, that there is uplink to-be-transmitted data;
   or
when receiving a data transmission notification message sent by the eNB, determining, by the UE, that there is downlink data that needs to be received, to determine that there is downlink to-be-transmitted data.

The data transmission notification message may be, for example, a paging message.

To sum up, for manner 1, after saving context according to the context information saving indication information of the eNB, the UE determines that the UE is in the RLF state, and defers triggering of the RRC connection re-establishment process to when there is the to-be-transmitted data, so as to quickly resume data transmission by reusing the RRC connection re-establishment process.

For manner 2, after saving context according to the context information saving indication information of the eNB, the UE determines that the UE is in the state of being timing synchronized with the eNB, and defers, to when there is the to-be-transmitted data, triggering of the RRC connection re-establishment process immediately when it is determined that the UE is in the RLF state, so as to quickly resume data transmission by reusing the RRC connection re-establishment process.

For manner 3, after saving context according to the context information saving indication information of the eNB, the UE determines to defer triggering of the cell selection or re-selection process immediately when the UE is in the RRC connection re-establishment initialization state, to triggering of the subsequent RRC connection re-establishment process immediately when there is the to-be-transmitted data, so as to quickly resume data transmission by reusing the RRC connection re-establishment process.

For manner 4, after saving context according to the context information saving indication information of the eNB, the UE determines to defer triggering of the cell selection or re-selection process immediately when the UE is in the RRC connection establishment initialization state, to triggering of the subsequent RRC connection establishment process immediately when there is the to-be-transmitted data, so as to quickly resume data transmission by changing the RRC connection establishment process.

In addition, it should be noted that, particularly for manner 1 and manner 2, when the user equipment has the uplink and/or downlink to-be-transmitted data or before the UE has the to-be-transmitted data, that is, before the RRC connection re-establishment process or the RRC connection establishment process is triggered for the eNB, it is first determined whether the current serving cell of the UE meets the preset communication requirement, for example, whether signal quality, received signal strength, or the like meets a preset threshold. If the current serving cell meets the preset communication requirement, the UE directly sends the RRC connection re-establishment request or the RRC connection establishment request to the eNB, and ignores, that is, skips the cell selection or re-selection process. If the current serving cell does not meet the preset communication requirement, the UE performs the cell selection or re-selection process, and sends an RRC connection re-establishment request or an RRC connection establishment request to the eNB when a cell is selected and an eNB corresponding to the cell is the eNB that sends the context information saving indication information.

In addition, for manner 1 and manner 2, it should be emphasized that, regardless of whether actual signal quality of the current UE meets the communications requirement or whether the current UE actually meets an RLF condition from a perspective of signal quality, the UE is forcibly required to be in the RLF state.

In this embodiment, after determining that the UE has not transmitted data within the specified time, the eNB sends the context information saving indication information to the UE, and immediately after receiving the context information saving indication information, the UE forcibly determines the UE to be in a state related to triggering of RRC connection re-establishment or triggering of RRC connection establishment, for example, the RLF state. When there is the data that needs to be transmitted, the RRC connection re-establishment process or the RRC connection establishment process is triggered immediately based on the state related to triggering, to quickly resume data transmission by reusing the RRC connection re-establishment process or the RRC connection establishment process. In addition, because an existing RRC connection re-establishment process and an existing RRC connection establishment process in an LTE specification are reused, the UE does not need to make a complex change, and is easy to implement.

It has been mentioned, in the foregoing embodiment, that the RRC connection re-establishment process or the RRC connection establishment process may be divided into two sub-processes: the initialization stage, namely, the cell selection or re-selection process, and the another RRC connection re-establishment process or the another RRC connection establishment process. In the following, an implementation of a cell selection or re-selection process is described with reference to an embodiment shown in FIG. 2. The cell selection or re-selection process is applicable to all of manner 1, manner 2, manner 3, and manner 4.

FIG. 2 is a flowchart of the cell selection or re-selection process according to this embodiment of the present invention. As shown in FIG. 2, specific implementation of the cell selection or re-selection process includes the following steps:
Step 201. UE starts a first timer, and performs the cell selection or re-selection process within a time period corresponding to the first timer, so as to select a cell.
Step 202. The UE releases context information if no cell is selected within the time period corresponding to the first timer or the first timer expires.

It should be noted that, in this embodiment, the first timer is configured to control a time length for saving the context information of the UE, and a length of the first timer T0 may be a preset value, or may be configured for the UE by an eNB. For example, when the eNB instructs the UE to save the context information, the saving indication information may be carried in a context information saving indication message, and the length of the first timer T0 is notified to the UE in the context information saving indication message. Specifically, the length of the first timer T0 may be a limited value, or may be a limitless value. When the first timer T0 expires, the UE needs to release the context information saved by the UE.

In addition, the UE may perform the cell selection or re-selection process under control of the first timer T0. If the UE cannot select a cell within a time period corresponding to the first timer T0, the UE determines to release the context information, and enters an RRC idle state.

Specifically, the performing, by the UE, the cell selection or re-selection process within a time period corresponding to the first timer, and selecting a cell, may be specifically implemented in the following manners:
starting, by the UE, a second timer, and within an i^{th} time period corresponding to the second timer, suspending or stopping the second timer if a first cell is selected; and
after the second timer is suspended or stopped, if the first cell is no longer a proper cell, resetting and restarting the second timer, and selecting a second cell within an (i+1-n)^{th} time period, where the proper cell in the embodiments of the present invention means that the cell can make signal quality, a signal path loss, a signal transmission rate, or the like for UE data transmission meet a service quality requirement; and
i is an integer ranging from 1 to n, n is an integer greater than 1, and the time period corresponding to the first timer is greater than a time period corresponding to the second timer.

Specifically, within the time period corresponding to the first timer T0, the UE may execute the following cell selection or re-selection policy:

The UE may start a second timer T1. The second timer T1 may control the UE to perform an operation related to cell selection or re-selection. Then, the UE may perform cell selection or re-selection according to a cell selection or re-selection standard. For example, cell selection or re-selection may be specifically performed according to the LTE 36.304 protocol.

Within a time period corresponding to the second timer T1, if the UE selects a cell, the UE suspends or stops the second timer T1. In addition, after a period of time, if the cell currently selected by the UE is no longer a proper cell, the UE resets and restarts the second timer T1, and then, performs cell selection or re-selection again to select another cell; this process is repeated until the first timer T0 expires or there is to-be-transmitted data arriving.

It should be noted that, the cell selection or re-selection process is applicable to all of manner 1, manner 2, manner 3, and manner 4, with the only difference in the time of execution and a quantity of executions for triggering the process. Specifically, for manner 1 and manner 2, because the cell selection or re-selection process and a corresponding subsequent RRC connection re-establishment process are performed successively, it may be unnecessary to perform cell selection or re-selection processes repeatedly for a plurality of second timers T1, provided that a cell is selected. However, for manner 3 and manner 4, the cell selection or re-selection process and a subsequent corresponding RRC connection re-establishment process or a subsequent corresponding RRC connection establishment process are performed separately; therefore, selection processes corresponding to a plurality of T1 timers usually need to be performed repeatedly until there is to-be-transmitted data arriving.

In addition, it should be noted that when sending context information saving indication information to the UE, the eNB may also send timer configuration information. The timer configuration information may include configuration information of the first timer T0, configuration information of the second timer T1, and configuration information of a security key timer, that is, a fourth timer T3. The fourth timer is configured to time validity of a security key in the context information. Certainly, the timer configuration information may further include other information described in the following, for example, configuration information of a third timer T2.

In addition, generally, a base station is corresponding to a plurality of different cells. In the cell selection or re-selection process, if an eNB corresponding to the selected cell is different from the eNB that sends the context information saving indication information, or a quantity of selected-cell changes is greater than or equal to a preset quantity, when the UE has to-be-transmitted data, the UE determines to trigger an initial RRC connection establishment process, that is, to perform new processing according to an existing RRC connection establishment process.

In addition, in a process of performing cell selection or re-selection, the UE triggers execution of a location update process when determining that a track area of the selected cell has changed, and establishes a data radio bearer with a new base station in the location update process.

Specifically, in the cell selection or re-selection process, the UE may select a new cell, and this cell and the previous cell do not belong to a same TA (Track Area), that is, a track area; the UE is triggered to perform location update at this time. During conventional location update, the UE does not need to establish a data radio bearer, and only a signaling radio bearer is established. However, in this embodiment, the UE is required to establish a data radio bearer with the eNB during location update.

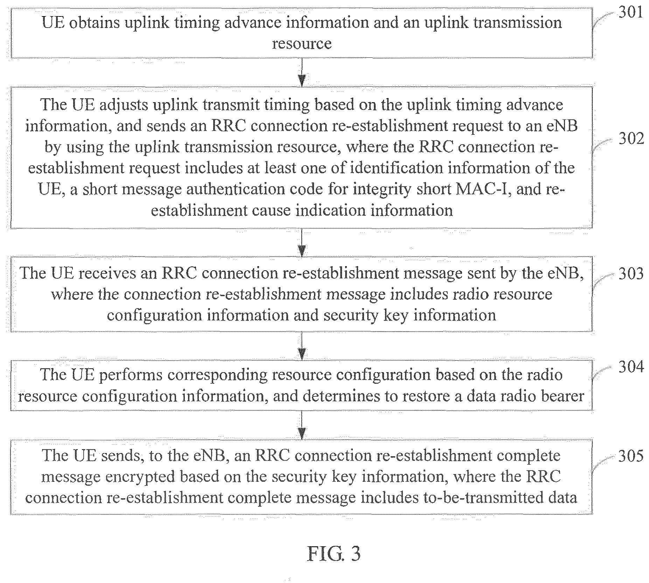

In the following, an implementation of another RRC connection re-establishment process following a cell selection or re-selection process is described with reference to an embodiment shown in FIG. 3. This process is essentially the same as for manner 1, manner 2, or manner 3, with a slight difference in the case of manner 3, and details are described later.

FIG. 3 is a flowchart of the RRC connection re-establishment process different from the cell selection or re-selection process according to this embodiment of the present invention. As shown in FIG. 3, the subsequent another RRC connection re-establishment process different from the cell selection or re-selection process may include the following steps.

Step 301. UE obtains uplink timing advance information and an uplink transmission resource.

During actual implementation, the UE obtains the uplink timing advance information and/or the uplink transmission resource.

Step 302. The UE adjusts uplink transmit timing based on the uplink timing advance information, and sends an RRC connection re-establishment request to an eNB by using the uplink transmission resource, where the RRC connection re-establishment request includes at least one of: identification information of the UE, a short message authentication code for integrity short MAC-I (for details, refer to 3GPP specifications), and re-establishment cause indication information.

The re-establishment cause indication information is used to instruct the UE to resume data transmission by using saved context information.

During actual implementation, the UE adjusts uplink transmit timing based on the uplink timing advance information, and/or sends the RRC connection re-establishment request to the eNB by using the uplink transmission resource.

Step 303. The UE receives an RRC connection re-establishment message sent by the eNB, where the connection re-establishment message includes radio resource configuration information and security key information.

Step 304. The UE performs corresponding resource configuration based on the radio resource configuration information, and determines to restore a data radio bearer.

It should be noted that a conventional RRC connection re-establishment process restores only a signaling radio bearer (Signaling Radio Bearer, SRB for short). In this embodiment, not only the SRB but also a data radio bearer (Data Radio Bearer, DRB for short) need to be restored.

Step 305. The UE sends, to the eNB, an RRC connection re-establishment complete message encrypted based on the security key information, where the RRC connection re-establishment complete message includes to-be-transmitted data.

Specifically, for a manner of obtaining the uplink timing advance information and the uplink transmission resource in step 301, the UE may use the following two optional manners to obtain the uplink timing advance information and the uplink transmission resource.

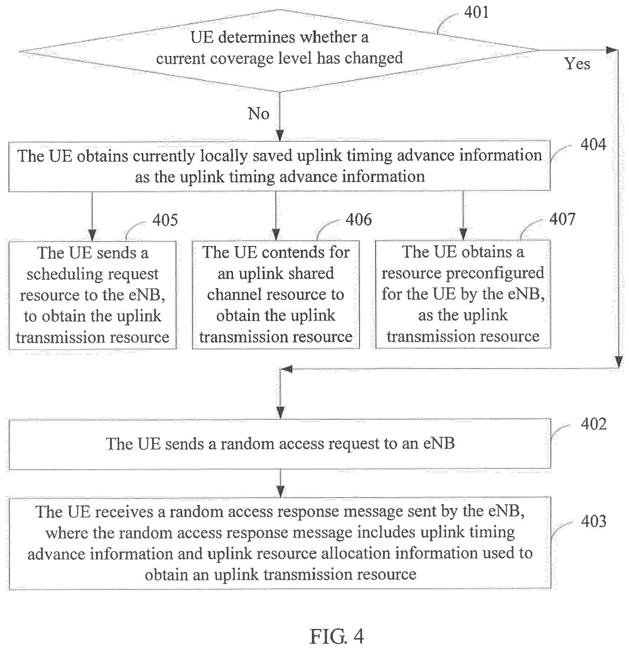

With reference to an embodiment shown in FIG. 4, a specific implementation of step 301 is described. As shown in FIG. 4, the obtaining manner includes the following steps.

Step 401. UE determines whether a current coverage level has changed; and when the coverage level has changed, performs step 402 and step 403, or when the coverage level has not changed, performs either step 404 and any one of steps 405 to 407.

Step 402. The UE sends a random access request to an eNB.

Step 403. The UE receives a random access response message sent by the eNB, where the random access response message includes uplink timing advance information and uplink resource allocation information used to obtain an uplink transmission resource.

Specifically, the UE may determine, based on radio resource management (Radio Resource Management, RRM for short) measurement, whether the coverage level of the UE has changed. To be specific, if an RRM measurement result change amount does not exceed a preset threshold, the UE determines that the coverage level of the UE has not changed; or if an RRM measurement result change amount exceeds a preset threshold, determines that the coverage level of the UE has changed.

When determining that the coverage level of the UE has changed, the UE sends a random access request (preamble) to the eNB, and the eNB feeds back a random access response message to the UE. The random access response message includes uplink timing advance information and uplink resource allocation information. In this way, the UE obtains a corresponding uplink transmission resource according to the uplink resource allocation information.

Step 404. The UE obtains currently locally saved uplink timing advance information as the uplink timing advance information.

If the UE determines that the coverage level has not changed, the UE uses the currently saved uplink timing advance information, so as to adjust uplink transmit timing when an RRC connection re-establishment request message needs to be sent.

The uplink transmission resource may be obtained in a manner described in any one of the following three steps.

Step 405. The UE sends a scheduling request resource to the eNB, to obtain the uplink transmission resource.

To obtain the uplink transmission resource, the UE may first use a saved scheduling request (Scheduling Request, SR for short) resource configuration to send an SR resource to the eNB, so as to obtain the uplink transmission resource. Then, the UE sends an RRC connection re-establishment request based on the obtained uplink transmission resource.

Step 406. The UE contends for an uplink shared channel resource to obtain the uplink transmission resource.

The UE contends for the uplink shared channel resource to send the RRC connection re-establishment request to the eNB.

Step 407. The UE obtains a resource preconfigured for the UE by the eNB, as the uplink transmission resource.

The UE sends the RRC connection re-establishment request by using the resource preconfigured by the eNB. Specifically, the preconfigured resource may be notified to the UE by the eNB when the UE is instructed to save the context information.

After the UE obtains the uplink timing advance information and the uplink transmission resource based on the obtaining manners in the foregoing two different cases, the UE adjusts uplink transmit timing based on the uplink timing advance information, and sends the RRC connection re-establishment request to the eNB by using the uplink transmission resource.

Specifically, a manner of sending the RRC connection re-establishment request is as follows:

The RRC connection re-establishment request carries identification information of the UE, for example, a cell radio network temporary identifier (Cell Radio Network Temporary Identifier, C-RNTI for short) or an s-temporary mobile subscriber identity (S-Temporary Mobile Subscriber Identity, S-TMSI for short). A message authentication code for integrity (Message Authentication Code for Integrity, MAC-I for short) is calculated, and least important 16 bits of the MAC-I are intercepted to obtain a short MAC-I, and the short MAC-I is carried in the RRC connection re-establishment request, for the eNB to determine the UE. The short MAC-I is generated based on input parameters which are the identification information of the UE, a cell identifier of a current cell of the UE, and a physical layer cell identifier of a cell that provides a service for the UE before re-establishment (the cell that provides a service for the UE before re-establishment may be the same as the current cell of the UE).

It should be noted that the short MAC-I may be generated by using the C-RNTI or the S-TMSI. In addition, when the C-RNTI is used, a C-RNTI that is allocated by a previous serving base station and that is saved currently by the UE is used.

When the short MAC-I is generated by using the C-RNTI, but the RRC connection re-establishment request includes the S-TMSI, the eNB needs to derive, based on the S-TMSI reported by the UE, the C-RNTI corresponding to the UE, and then verifies, by using the derived C-RNTI, the short MAC-I generated by the eNB and the short MAC-I reported by the UE. To do this, the eNB needs to save the S-TMSI of the UE after instructing the UE to save the context information.

In addition, the RRC connection re-establishment request further carries indication information used to indicate connection resumption or data transmission resumption, namely, the re-establishment cause indication information, to notify an RRC connection re-establishment cause to the eNB.

After receiving the RRC connection re-establishment request sent by the UE, the eNB allocates radio resource configuration information and security key information (for example, nextHopChainingCount) for the UE, and sends an RRC connection re-establishment message with the allocated information to the UE.

The UE receives the RRC connection re-establishment message sent by the eNB, performs corresponding resource configuration based on the radio resource configuration information, restores a DRB, and sends, to the eNB, an RRC connection re-establishment complete message encrypted based on the security key information.

Specifically, the UE updates an intermediate key KeNB based on the security key information in the RRC connection re-establishment message, generates a message integrity protection key K_{RRCinc} based on a new intermediate key KeNB and an integrity protection algorithm, generates a message encryption key K_{RRCenc} and a data encryption key K_{UPenc} based on the updated intermediate key KeNB and an encryption algorithm, and activates the foregoing keys immediately for later use.

The UE sends an RRC connection re-establishment complete message to the eNB. Specifically, the UE needs to encrypt and apply integrity protection on the RRC connection re-establishment complete message based on the newly generated encryption and integrity protection keys, for example, the message integrity protection key K_{RRCinc} and the message encryption key K_{RRCenc}. The RRC connection re-establishment complete message may further include to-be-transmitted data, to implement uplink transmission of the to-be-transmitted data.

Regarding the embodiments shown in FIG. 2 and FIG. 3, execution by the UE in manner 1, manner 2, and manner 3 are as follows:
for manner 1 and manner 2, when the UE determines that there is to-be-transmitted data, embodiments shown in FIG. 2 and FIG. 3 are executed in sequence; and
for manner 3, the embodiment shown in FIG. 2 is first executed, and when the UE determines that there is to-be-transmitted data, the embodiment shown in FIG. 3 is executed.

It should be noted that, for manner 3, when it is determined that the UE is in an RRC connection re-establishment initialization state, a cell selection or re-selection process is performed. During this time, when the UE has to-be-transmitted data, the UE immediately starts a third timer T2 and stops a second timer T1 and a first timer T0, so as to control a subsequent RRC connection re-establishment process by using T2.

Specifically, if the UE receives, within a time period corresponding to the third timer T2, the RRC connection re-establishment message sent by the eNB, timing of the third timer T2 is stopped. This indicates that RRC connection re-establishment succeeds. If the UE does not receive the RRC connection re-establishment message within a time period corresponding to the third timer T2, it indicates that RRC connection re-establishment fails; in this case, the UE performs one or more of the following operations:
entering an RRC idle state;
stopping the first timer;
triggering sending of an RRC connection establishment request to the base station corresponding to the cell; and
triggering cell selection or re-selection, and sending an RRC connection establishment request to the base station corresponding to the selected cell.

In the embodiments shown in FIG. 2 and FIG. 3, after the UE forcibly determines the UE to be in a state related to triggering of RRC connection re-establishment, when there is data that needs to be transmitted, the UE performs an RRC connection re-establishment process corresponding to the specific trigger related state, so as to quickly and conveniently resume data transmission and complete transmission of to-be-transmitted data.

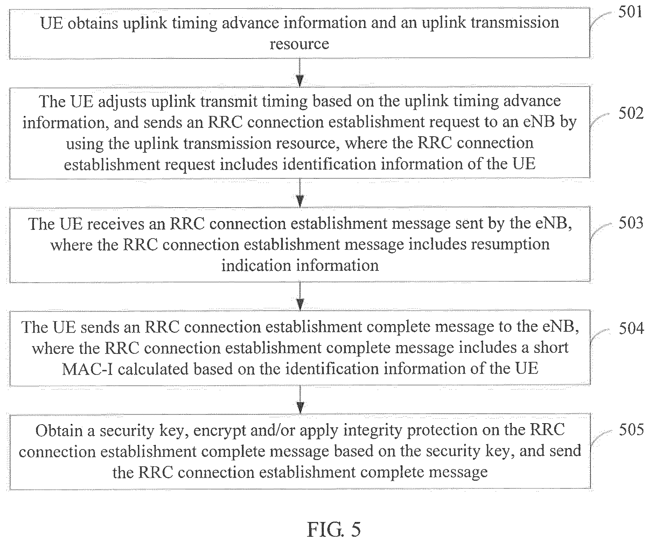

In the following, an implementation of another RRC connection establishment process following a cell selection or re-selection process is described with reference to an embodiment shown in FIG. 5. The process is described with respect to manner 4.

FIG. 5 is a flowchart of an implementation of an RRC connection establishment process different from the cell selection or re-selection process according to this embodiment of the present invention. As shown in FIG. 5, the subsequent another RRC connection establishment process different from the cell selection or re-selection process may include the following steps.

Step 501. UE obtains uplink timing advance information and an uplink transmission resource.

Step 502. The UE adjusts uplink transmit timing based on the uplink timing advance information, and sends an RRC connection establishment request to an eNB by using the uplink transmission resource, where the RRC connection establishment request includes identification information of the UE.

The identification information of the user equipment includes an s-temporary mobile subscriber identity (S-Temporary Mobile Subscriber Identity, S-TMSI for short).

In this embodiment, the uplink timing advance information and the uplink transmission resource may be obtained with reference to the manner in the embodiment shown in FIG. 4.

Step 503. The UE receives an RRC connection establishment message sent by the eNB, where the RRC connection establishment message includes resumption indication information.

The resumption indication information is used to instruct the UE to resume data transmission by using saved context information. The RRC connection establishment message is sent when the eNB determines, based on the S-TMSI, that the context information of the UE is valid.

Specifically, after receiving the RRC connection establishment request sent by the UE, the eNB determines, based on the S-TMSI of the UE, whether the context information of the UE is valid. When determining that the context information of the UE is valid for the eNB, the eNB sends the RRC connection establishment message to the UE. The RRC connection establishment message carries indication information used to instruct the UE to resume data transmission by using the saved context information, namely, the resumption indication information.

It should be noted that if an MME changed the S-TMSI of the UE before the UE enters a state of context saving, the MME needs to notify a new S-TMSI of the UE to the eNB. Then, when the UE sends the RRC connection establishment request to the eNB during access to the eNB in a resumption process, the new S-TMSI allocated by the MME is provided. Because the MME also notifies the current new S-TMSI of the UE to the eNB, the eNB can find context information of the UE, and determine that the context information of the UE is valid. Otherwise, if the UE provides a new S-TMSI, but the eNB does not locally know the new S-TMSI of the UE, the eNB misunderstands that the context information of the UE is not saved.

Step 504. The UE sends an RRC connection establishment complete message to the eNB, where the RRC connection establishment complete message includes a short MAC-I calculated based on the identification information of the UE.

After receiving the RRC connection establishment message sent by the eNB, the UE determines that the RRC connection establishment message includes indication information used to instruct to resume transmission by using saved context, and the UE determines to send the RRC connection establishment complete message to the eNB. First, the UE calculates a message authentication code for integrity MAC-I by using identification information, for example, a C-RNTI or an S-TMSI, of the UE, and intercepts least important 16 bits of the MAC-I to obtain a short MAC-I. Further, the RRC connection establishment complete message carries the short MAC-I.

The MAC-I is generated based on input parameters which are the identification information of the UE, a cell identifier of a current cell of the UE, and a physical layer cell identifier of a cell that provides a service for the UE before a current connection is established (the cell that provides the service for the UE before the current connection is established may be the same as the current cell of the UE).

It should be noted that when the short MAC-I is calculated by using the C-RNTI, an original C-RNTI saved in the context information by the UE may be used, or a C-RNTI that is newly allocated by the eNB and that is obtained before the RRC connection establishment message is received may be used for calculation. The new C-RNTI may be carried in a context saving indication message and allocated to the UE.

It should be noted that the eNB always adds configuration information of an SRB (which may include an SRB 1 and an SRB 2) to the RRC connection establishment message, so that when a saved SRB configuration is lost locally on a UE side, the UE can still continue to complete the RRC connection establishment process successfully based on an SRB configuration provided in the RRC connection establishment message. Even if local context information of the UE is lost, the UE does not need to send another RRC connection establishment request, but can complete RRC connection establishment by using a current RRC connection establishment message based on a conventional RRC connection establishment process. For the eNB, if the eNB finds that the RRC connection establishment complete message sent by the UE is the same as the conventional RRC connection establishment complete message, for example, if no security protection is applied on the message or no short MAC-I is carried in the message, the eNB sends a security activation command to the UE by following a conventional procedure.

Step 505. Obtain a security key, encrypt and/or apply integrity protection on the RRC connection establishment complete message based on the security key, and send the RRC connection establishment complete message.

Optionally, the to-be-transmitted data may alternatively be sent after being encrypted based on the security key.

In this embodiment, the RRC connection establishment complete message and the to-be-transmitted data may be sent with encryption. A specific encryption key obtaining manner and an encrypted sending manner may be implemented in the following manners:

Optionally, the UE directly obtains a previous security key pre-saved by the UE. The security key includes a message integrity protection key K_{RRCinc}, a message encryption key K_{RRCenc}, and a data encryption key K_{UPenc}.

In this case, the UE may encrypt and/and apply integrity protection on the RRC connection establishment complete message based on the message integrity protection key K_{RRCinc} and the message encryption key K_{RRCenc}, and send the RRC connection establishment complete message. The UE encrypts and sends the to-be-transmitted data based on the data encryption key K_{UPenc}.

Optionally, after the UE sends the RRC connection establishment complete message to the eNB, the eNB may further send security key indication information to the UE. The security key indication information includes security key information. The UE updates an intermediate key KeNB based on the security key information after receiving the security key indication information sent by the eNB, generates a message integrity protection key K_{RRCinc} based on an updated intermediate key KeNB and an integrity protection algorithm, and generates a message encryption key K_{RRCenc} and a data encryption key K_{UPenc} based on the updated intermediate key KeNB and an encryption algorithm.

The security key indication information is carried in any one of the following messages: a key update indication message, a data transmission indication message, an RRC connection establishment message, and a message carrying the UE context saving indication information.

In this case, the UE may encrypt and send a subsequent RRC control message based on the message integrity protection key K_{RRCinc} and the message encryption key K_{RRCenc}. The UE may further encrypt and send the to-be-transmitted data based on the data encryption key K_{UPenc}.

It should be noted that the RRC connection establishment request may be sent after encryption and/or integrity protection are/is performed based on the security key. This is similar to processing on the RRC connection establishment complete message, and details are not repeated.

Optionally, the UE may send the RRC connection establishment complete message to the eNB in the following several optional implementations:
Manner 1: The RRC connection establishment complete message includes a short MAC-I calculated based on the identification information of the UE.
Manner 2: The UE sends, to the eNB, an RRC connection establishment complete message encrypted by using the message integrity protection key K_{RRCinc} and the message encryption key K_{RRCenc}. The RRC connection establishment complete message includes a short MAC-I calculated based on the identification information of the UE.
Manner 3: The UE sends, to the eNB, an RRC connection establishment complete message encrypted by using the message integrity protection key K_{RRCinc} and the message encryption key K_{RRCenc}. The RRC connection establishment complete message does not carry a short MAC-I.

Regarding manner 1, manner 2, manner 3, and manner 4, the following separately describes, from a perspective of interaction between UE and an eNB, resumption of data transmission through an RRC connection re-establishment process.

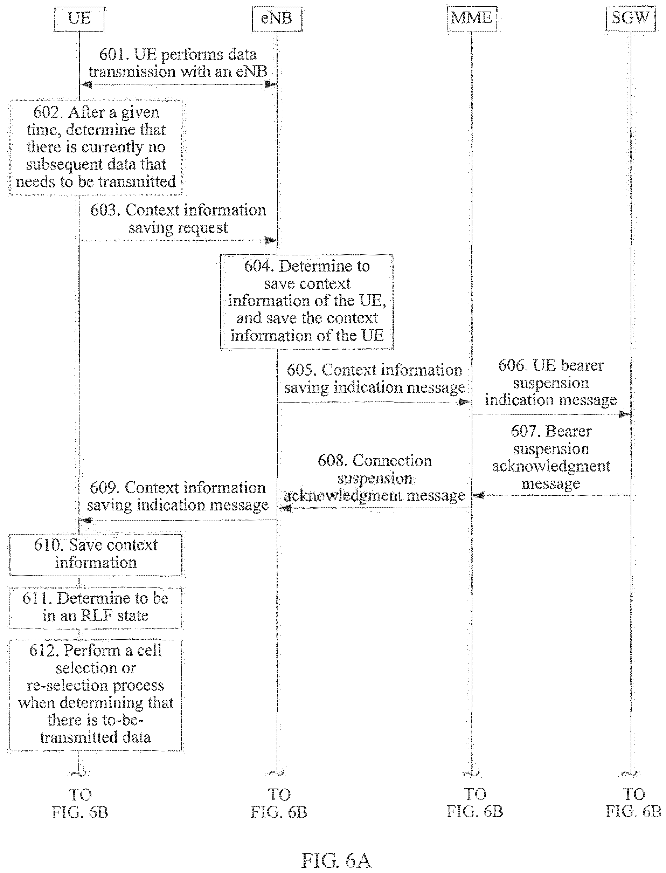

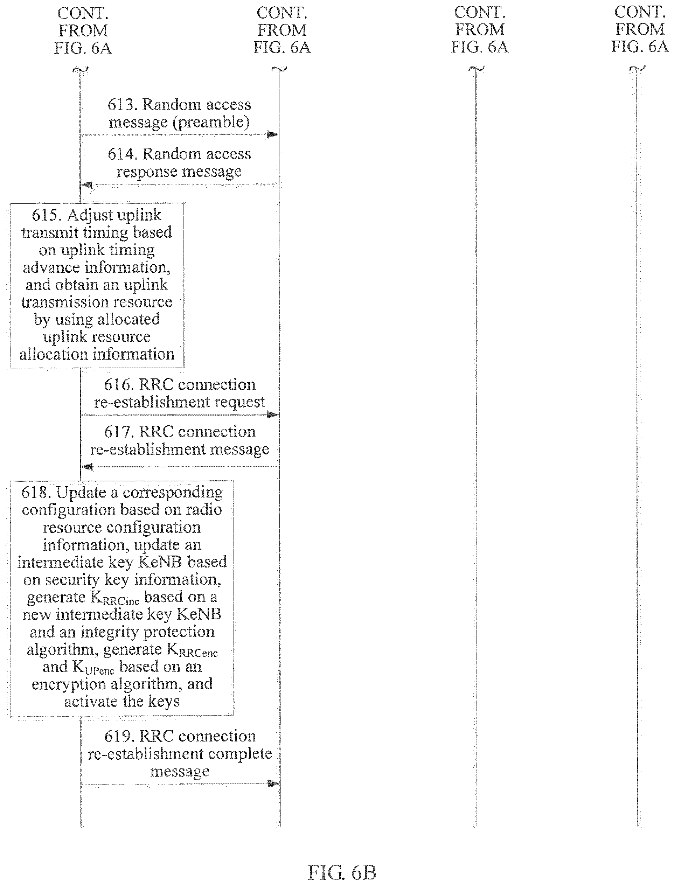

FIG. 6A and FIG. 6B are a diagram of signaling interaction of Embodiment 2 of a data transmission processing method according to an embodiment of the present invention. This embodiment is described with respect to manner 1. As shown in FIG. 6A and FIG. 6B, the method specifically includes the following steps.

Step 601. UE performs data transmission with an eNB.

Step 602. After a given time, the UE determines that there is currently no subsequent data that needs to be transmitted.

Step 603. The UE sends a context information saving request to the eNB.

Alternatively, the context information saving request may be referred to as an RRC suspension request used to request to save context information of the UE.

Step 602 and step 603 are optional steps, and therefore, are marked by dashed lines in the figure.

Step 604. The eNB determines to save context information of the UE, and saves the context information of the UE.

Alternatively, the context information saving request is equivalently referred to as RRC connection suspension. Specifically, when receiving the context information saving request sent by the UE, the eNB may determine that the context information of the UE may be saved. Alternatively, when determining, depending on a status of data transmission with the UE, that the UE has not transmitted data within a specified time, the eNB may automatically determine that saving the context information of the UE (or referred to as RRC connection suspension) may be performed.

Step 605. The eNB sends a UE context information saving indication message to an MME.

Alternatively, the context information saving indication message is referred to as a context information saving request message, an RRC connection suspension request message, or an RRC connection suspension indication message, used to notify the MME that the UE is to be in a context information saved state or an RRC connection suspended state.

Step 606. The MME sends a UE bearer suspension indication message to an SGW.

The indication message is used to indicate to the SGW that a bearer of the UE is to be in a suspended state or a data transmission suspended state.

After receiving the UE context information saving indication message sent by the eNB, the MME determines that the UE is to be in a context information saved state or an RRC connection suspended state. Then, the MME sends an indication message to the SGW, to indicate to the SGW that a bearer of the UE is to be in a suspended state or a data transmission suspended state.

Step 607. The SGW sends a bearer suspension acknowledgment message to the MME.

Step 608. The MME sends a connection suspension acknowledgment message to the eNB.

Step 609. The eNB sends a context information saving indication message to the UE.

Alternatively, the context information saving indication message is equivalently referred to as an RRC connection suspension indication message or an RRC connection release indication message. The context information saving indication message carries context information saving indication information, to order the UE to save the context information of the UE.

Step 610. The UE saves context information.

Step 611. The UE determines to be in an RLF state.

Step 612. The UE performs a cell selection or re-selection process when determining that there is to-be-transmitted data.

Specifically, when determining that the context information of the UE needs to be saved or determining that the UE needs to be in an RRC-suspended state, the UE determines to be currently in an RLF state (or referred to as an extended RLF state or a virtual RLF state), and the UE does not immediately trigger an RRC connection re-establishment process, but trigger an RRC connection re-establishment process when at least one of the following trigger conditions is met:
uplink data of the UE arrives or the UE has uplink data that needs to be sent;
the UE receives a data transmission notification message, for example, a paging message, sent by the eNB; and
when determining that there is new uplink and/or downlink data that need/needs to be transmitted, the UE triggers a process of re-establishing an RRC connection to the eNB, and performs a cell selection or re-selection process, where for execution of the cell selection or re-selection process, refer to the foregoing related embodiment.

Step 613. The UE sends a random access message (preamble) to the eNB.

Step 614. The eNB sends a random access response message to the UE.

The random access response message includes uplink timing advance information and uplink resource allocation information.

Step 615. The UE adjusts uplink transmit timing based on uplink timing advance information, and obtains an uplink transmission resource by using allocated uplink resource allocation information.

Step 616. The UE sends an RRC connection re-establishment request to the eNB.

The RRC connection re-establishment request includes identification information, for example, a C-RNTI, of the UE, a short message authentication code for integrity short MAC-I, and re-establishment cause indication information. The indication information is used to indicate an RRC connection re-establishment cause.

Step 617. The eNB sends an RRC connection re-establishment message to the UE.

The connection re-establishment message includes radio resource configuration information and security key information, for example, nextHopChainingCount.

Step 618. The UE updates a corresponding configuration based on radio resource configuration information, updates an intermediate key KeNB based on security key information, generates K_{RRCinc} based on a new intermediate key KeNB and an integrity protection algorithm, generates K_{RRCenc} and K_{UPenc} based on an encryption algorithm, and activates the keys.

Step 619. The UE sends an RRC connection re-establishment complete message to the eNB.

Specifically, the UE needs to encrypt and apply integrity protection on the RRC connection re-establishment complete message based on newly generated encryption and integrity protection keys. The RRC connection re-establishment complete message may further include to-be-transmitted data.

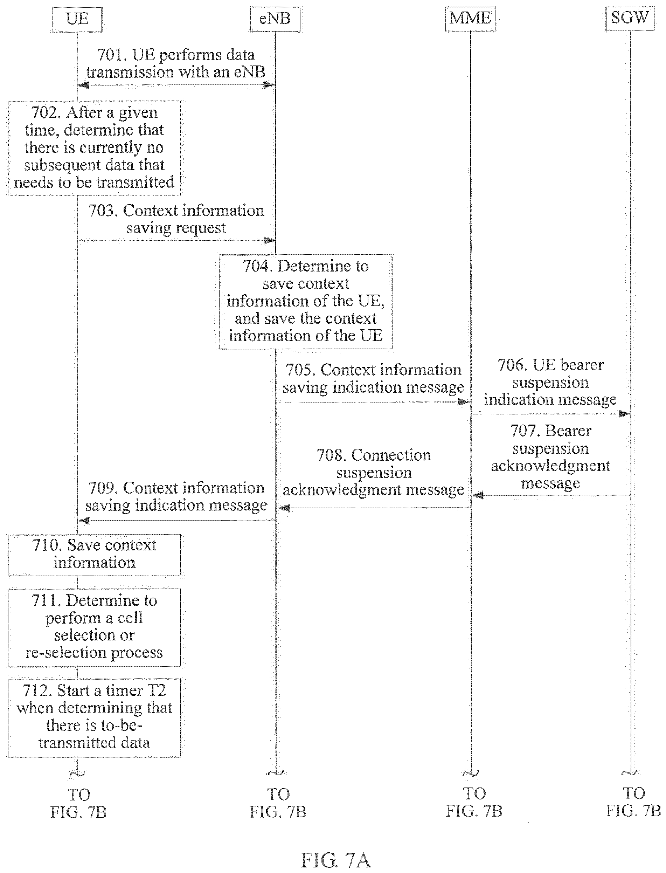

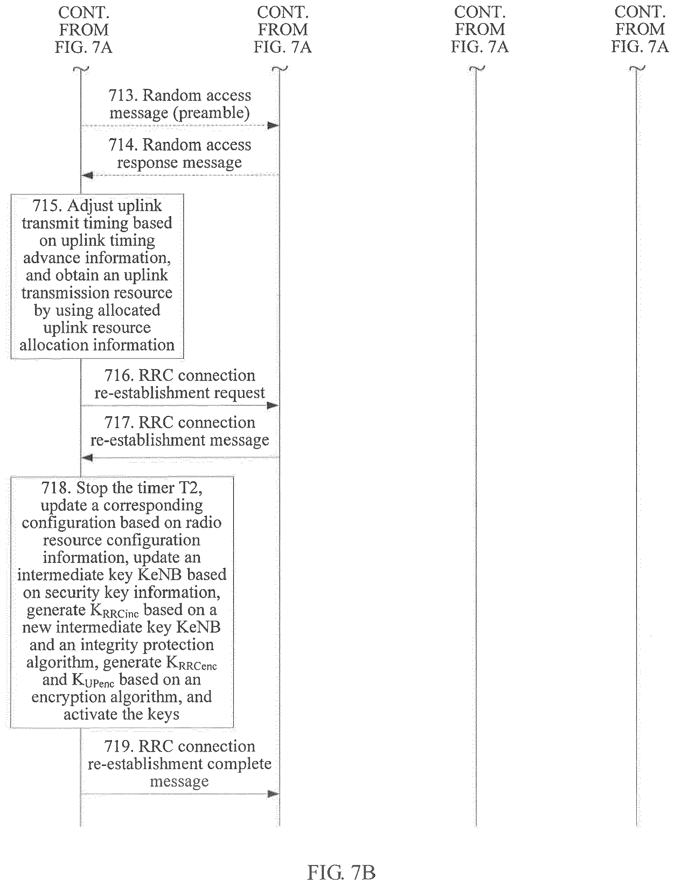

FIG. 7A and FIG. 7B are a diagram of signaling interaction of Embodiment 3 of a data transmission processing method according to an embodiment of the present invention. This embodiment is described with respect to manner 3. As shown in FIG. 7A and FIG. 7B, the method includes the following steps.

Step 701. UE performs data transmission with an eNB.

Step 702. After a given time, the UE determines that there is currently no subsequent data that needs to be transmitted.

Step 703. The UE sends a context information saving request to the eNB.

Alternatively, the context information saving request may be referred to as an RRC suspension request used to request to save context information of the UE.

Step 702 and step 703 are optional steps, and therefore, are marked by dashed lines in the figure.

Step 704. The eNB determines to save context information of the UE, and saves the context information of the UE.

Alternatively, the context information saving request is equivalently referred to as RRC connection suspension. Specifically, when receiving the context information saving request sent by the UE, the eNB may determine that the context information of the UE may be saved. Alternatively, when determining, depending on a status of data transmission with the UE, that the UE has not transmitted data within a specified time, the eNB may automatically determine that saving the context information of the UE (or referred to as RRC connection suspension) may be performed.

Step 705. The eNB sends a UE context information saving indication message to an MME.

Alternatively, the context information saving indication message is referred to as a context information saving request message, an RRC connection suspension request message, or an RRC connection suspension indication message, used to notify the MME that the UE is to be in a context information saved state or an RRC connection suspended state.

Step 706. The MME sends a UE bearer suspension indication message to an SGW.

The indication message is used to indicate to the SGW that a bearer of the UE is to be in a suspended state or a data transmission suspended state.

After receiving the UE context information saving indication message sent by the eNB, the MME determines that the UE is to be in a context information saved state or an RRC connection suspended state. Then, the MME sends an indication message to the SGW, to indicate to the SGW that a bearer of the UE is to be in a suspended state or a data transmission suspended state.

Step 707. The SGW sends a bearer suspension acknowledgment message to the MME.

Step 708. The MME sends a connection suspension acknowledgment message to the eNB.

Step 709. The eNB sends a context information saving indication message to the UE.

Alternatively, the context information saving indication message is equivalently referred to as an RRC connection suspension indication message or an RRC connection release indication message. The context information saving indication message carries context information saving indication information, to order the UE to save the context information of the UE.

Step 710. The UE saves context information.

Step 711. The UE determines to perform a cell selection or re-selection process.

Alternatively, the UE first determines to enter an RLF state, and then determines to trigger the cell selection or re-selection process.

For execution of the cell selection or re-selection process, refer to the foregoing related embodiment.

Step 712. The UE starts a timer T2 when determining that there is to-be-transmitted data.

Specifically, after the UE performs cell selection or re-selection, that is, after a cell is selected, the UE does not immediately trigger a subsequent RRC connection re-establishment process, but trigger a subsequent RRC connection re-establishment process when at least one of the following trigger conditions is met:
uplink data of the UE arrives or the UE has uplink data that needs to be sent;
the UE receives a data transmission notification message, for example, a paging message, sent by the eNB; and
when determining that there is new uplink and/or downlink data that need/needs to be transmitted, the UE triggers a process of re-establishing a subsequent RRC connection to the eNB.

Step 713. The UE sends a random access message (preamble) to the eNB.

Step 714. The eNB sends a random access response message to the UE.

The random access response message includes uplink timing advance information and uplink resource allocation information.

Step 715. The UE adjusts uplink transmit timing based on uplink timing advance information, and obtains an uplink transmission resource by using allocated uplink resource allocation information.

Step 716. The UE sends an RRC connection re-establishment request to the eNB.

The RRC connection re-establishment request includes identification information, for example, a C-RNTI, of the UE, a short message authentication code for integrity short MAC-I, and re-establishment cause indication information. The indication information is used to indicate an RRC connection re-establishment cause.

Step 717. The eNB sends an RRC connection re-establishment message to the UE.

The connection re-establishment message includes radio resource configuration information and security key information, for example, nextHopChainingCount.

Step 718. The UE stops the timer T2, updates a corresponding configuration based on radio resource configuration information, updates an intermediate key KeNB based on security key information, generates K_{RRCinc} based on a new intermediate key KeNB and an integrity protection algorithm, generates K_{RRCenc} and K_{UPenc} based on an encryption algorithm, and activates the keys.

If the UE receives the RRC connection re-establishment message, it indicates that RRC connection re-establishment succeeds, and the timer T2 is stopped; or if the UE does not receive the RRC connection re-establishment message, it indicates that RRC connection re-establishment fails, and the UE enters an RRC idle state.

Step 719. The UE sends an RRC connection re-establishment complete message to the eNB.

Specifically, the UE needs to encrypt and apply integrity protection on the RRC connection re-establishment complete message based on newly generated encryption and integrity protection keys. The RRC connection re-establishment complete message may further include to-be-transmitted data.

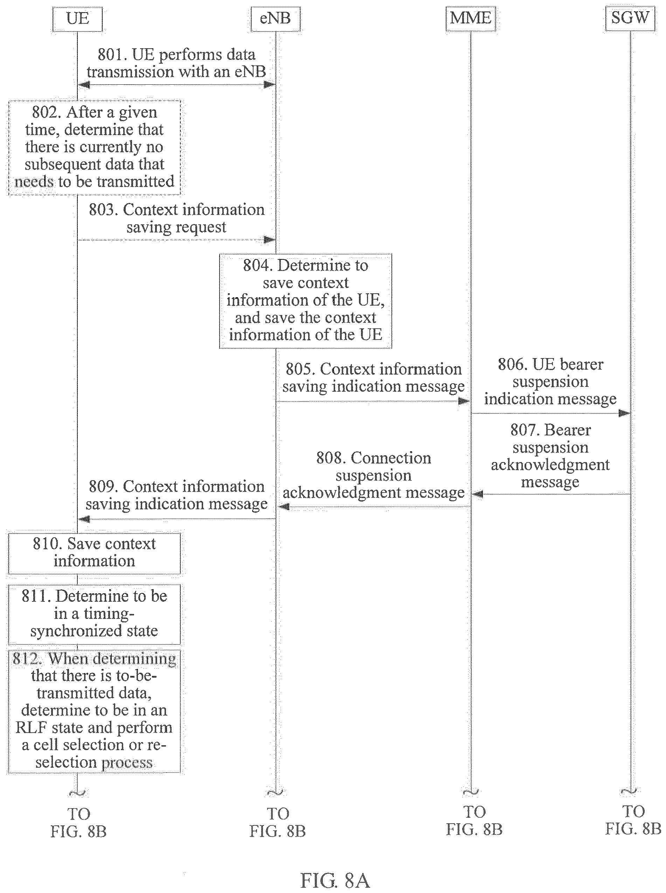

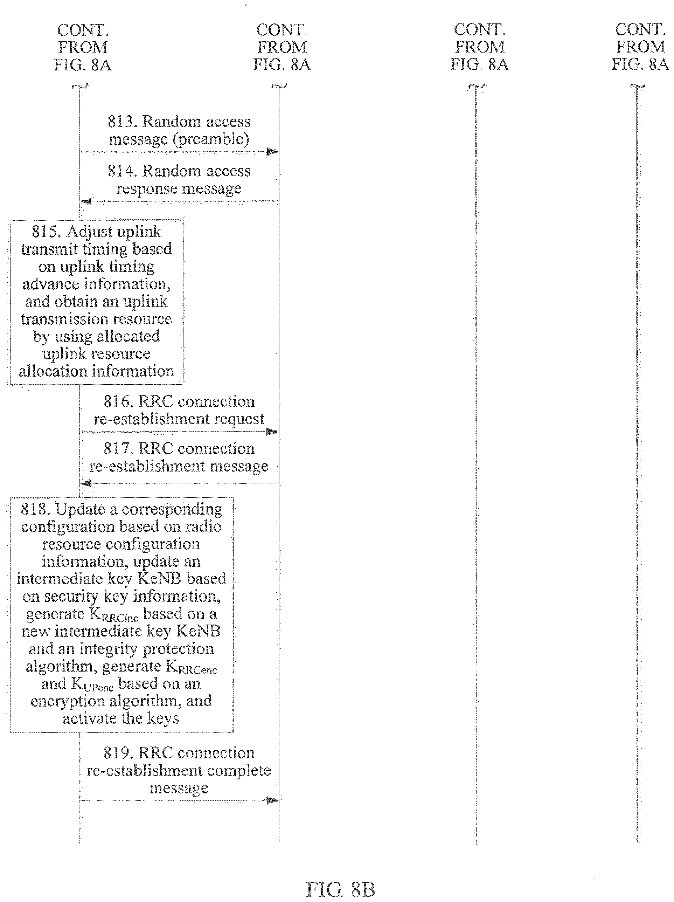

FIG. 8A and FIG. 8B are a diagram of signaling interaction of Embodiment 4 of a data transmission processing method according to an embodiment of the present invention. This embodiment is described with respect to manner 2. As shown in FIG. 8A and FIG. 8B, the method includes the following steps.

Step 801. UE performs data transmission with an eNB.

Step 802. After a given time, the UE determines that there is currently no subsequent data that needs to be transmitted.

Step 803. The UE sends a context information saving request to the eNB.

Alternatively, the context information saving request may be referred to as an RRC suspension request used to request to save context information of the UE.

Step 802 and step 803 are optional steps, and therefore, are marked by dashed lines in the figure.

Step 804. The eNB determines to save context information of the UE, and saves the context information of the UE.

Alternatively, the context information saving request is equivalently referred to as RRC connection suspension. Specifically, when receiving the context information saving request sent by the UE, the eNB may determine that the context information of the UE may be saved. Alternatively, when determining, depending on a status of data transmission with the UE, that the UE has not transmitted data within a specified time, the eNB may automatically determine that saving the context information of the UE (or referred to as RRC connection suspension) may be performed.

Step 805. The eNB sends a UE context information saving indication message to an MME.

Alternatively, the context information saving indication message is referred to as a context information saving request message, an RRC connection suspension request message, or an RRC connection suspension indication message, used to notify the MME that the UE is to be in a context information saved state or an RRC connection suspended state.

Step 806. The MME sends a UE bearer suspension indication message to an SGW.

The indication message is used to indicate to the SGW that a bearer of the UE is to be in a suspended state or a data transmission suspended state.

After receiving the UE context information saving indication message sent by the eNB, the MME determines that the UE is to be in a context information saved state or an RRC connection suspended state. Then, the MME sends an indication message to the SGW, to indicate to the SGW that a bearer of the UE is to be in a suspended state or a data transmission suspended state.

Step 807. The SGW sends a bearer suspension acknowledgment message to the MME.

Step 808. The MME sends a connection suspension acknowledgment message to the eNB.

Step 809. The eNB sends a context information saving indication message to the UE.

Alternatively, the context information saving indication message is equivalently referred to as an RRC connection suspension indication message or an RRC connection release indication message. The context information saving indication message carries context information saving indication information, to order the UE to save the context information of the UE.

Step 810. The UE saves the context information.

Step 811. The UE determines to be in a timing-synchronized state.

Specifically, the UE may start a timer T3-1, and the UE is always determined to be in the timing-synchronized state within a time length of the timer.

Step 812. When determining that there is to-be-transmitted data, the UE determines to be in an RLF state and performs a cell selection or re-selection process.

Specifically, the UE triggers an RLF event when at least one of the following trigger conditions is met:
uplink data of the UE arrives or the UE has uplink data that needs to be sent;
the UE receives a data transmission notification message, for example, a paging message, sent by the eNB; and
the UE triggers an RLF event when determining that there is new uplink and/or downlink data that need/needs to be transmitted, to perform a process of re-establishing an RRC connection to the eNB and perform the cell selection or re-selection process, where for execution of the cell selection or re-selection process, refer to the foregoing related embodiment.

Step 813. The UE sends a random access message (preamble) to the eNB.

Step 814. The eNB sends a random access response message to the UE.

The random access response message includes uplink timing advance information and uplink resource allocation information.

Step 815. The UE adjusts uplink transmit timing based on uplink timing advance information, and obtains an uplink transmission resource by using allocated uplink resource allocation information.

Step 816. The UE sends an RRC connection re-establishment request to the eNB.

The RRC connection re-establishment request includes identification information, for example, a C-RNTI, of the UE, a short message authentication code for integrity short MAC-I, and re-establishment cause indication information. The indication information is used to indicate an RRC connection re-establishment cause.

Step 817. The eNB sends an RRC connection re-establishment message to the UE.

The connection re-establishment message includes radio resource configuration information and security key information, for example, nextHopChainingCount.

Step 818. The UE updates a corresponding configuration based on radio resource configuration information, updates an intermediate key KeNB based on security key information, generates K_{RRCinc} based on a new intermediate key KeNB and an integrity protection algorithm, generates K_{RRCenc} and K_{UPenc} based on an encryption algorithm, and activates the keys.

Step 819. The UE sends an RRC connection re-establishment complete message to the eNB.

Specifically, the UE needs to encrypt and apply integrity protection on the RRC connection re-establishment complete message based on newly generated encryption and integrity protection keys. The RRC connection re-establishment complete message may further include to-be-transmitted data.

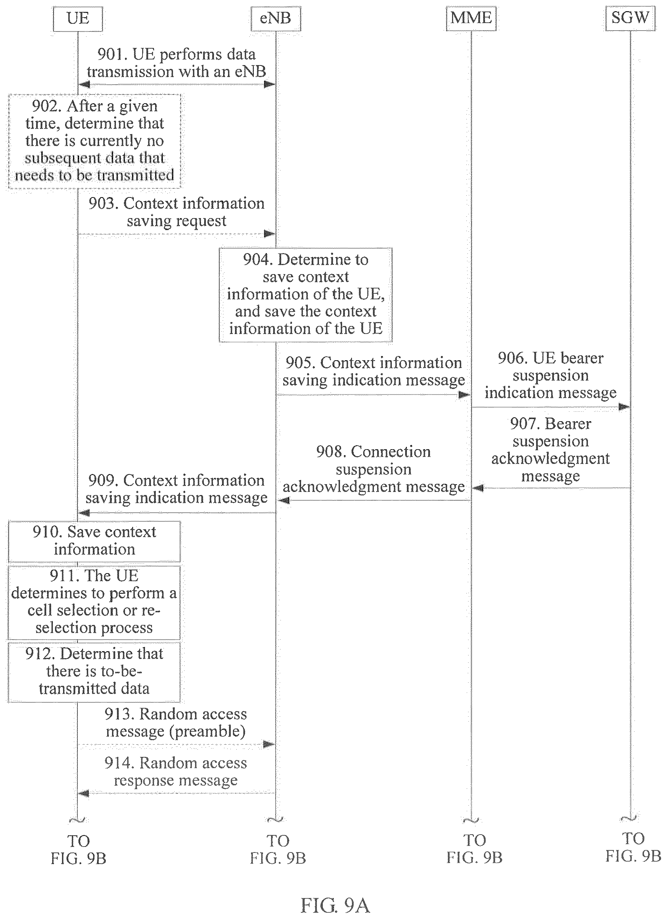

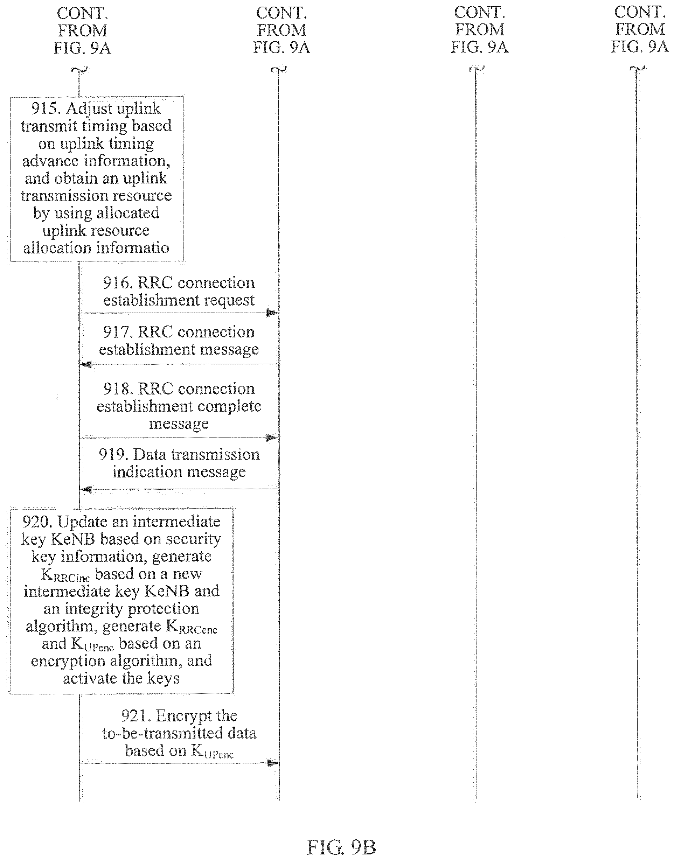

FIG. 9A and FIG. 9B are a diagram of signaling interaction of Embodiment 4 of a data transmission processing method according to an embodiment of the present invention. This embodiment is described with respect to manner 4. As shown in FIG. 9A and FIG. 9B, the method includes the following steps.

Step 901. UE performs data transmission with an eNB.

Step 902. After a given time, the UE determines that there is currently no subsequent data that needs to be transmitted.

Step 903. The UE sends a context information saving request to the eNB.

Alternatively, the context information saving request may be referred to as an RRC suspension request used to request to save context information of the UE.

Step 902 and step 903 are optional steps, and therefore, are marked by dashed lines in the figure.

Step 904. The eNB determines to save context information of the UE, and saves the context information of the UE.

Alternatively, the context information saving request is equivalently referred to as RRC connection suspension. Specifically, when receiving the context information saving request sent by the UE, the eNB may determine that the context information of the UE may be saved. Alternatively, when determining, depending on a status of data transmission with the UE, that the UE has not transmitted data within a specified time, the eNB may automatically determine that saving the context information of the UE (or referred to as RRC connection suspension) may be performed.

Step 905. The eNB sends a UE context information saving indication message to an MME.

Alternatively, the context information saving indication message is referred to as a context information saving request message, an RRC connection suspension request message, or an RRC connection suspension indication message, used to notify the MME that the UE is to be in a context information saved state or an RRC connection suspended state.

Step 906. The MME sends a UE bearer suspension indication message to an SGW.

The indication message is used to indicate to the SGW that a bearer of the UE is to be in a suspended state or a data transmission suspended state.

After receiving the UE context information saving indication message sent by the eNB, the MME determines that the UE is to be in a context information saved state or an RRC connection suspended state. Then, the MME sends an indication message to the SGW, to indicate to the SGW that a bearer of the UE is to be in a suspended state or a data transmission suspended state.

Step 907. The SGW sends a bearer suspension acknowledgment message to the MME.

Step 908. The MME sends a connection suspension acknowledgment message to the eNB.

Step 909. The eNB sends a context information saving indication message to the UE.

Alternatively, the context information saving indication message is equivalently referred to as an RRC connection suspension indication message or an RRC connection release indication message. The context information saving indication message carries context information saving indication information, to order the UE to save the context information of the UE.

Step 910. The UE saves the context information.

Step 911. The UE determines to perform a cell selection or re-selection process.

For execution of the cell selection or re-selection process, refer to the foregoing related embodiment.

Step 912. The UE determines that there is to-be-transmitted data.

Specifically, after the UE completes cell selection or re-selection, that is, after cell selection or re-selection is performed and a cell is selected, the UE does not immediately trigger a subsequent RRC connection establishment process, but trigger a subsequent RRC connection establishment process when at least one of the following trigger conditions is met:
uplink data of the UE arrives or the UE has uplink data that needs to be sent;
the UE receives a data transmission notification message, for example, a paging message, sent by the eNB; and
when determining that there is new uplink and/or downlink data that need/needs to be transmitted, the UE triggers a process of establishing a subsequent RRC connection to the eNB.

Step 913. The UE sends a random access message (preamble) to the eNB.

Step 914. The eNB sends a random access response message to the UE.

The random access response message includes uplink timing advance information and uplink resource allocation information.

Step 915. The UE adjusts uplink transmit timing based on uplink timing advance information, and obtains an uplink transmission resource by using allocated uplink resource allocation information.

Step 916. The UE sends an RRC connection establishment request to the eNB.

The RRC connection establishment request message carries identification information, an S-TMSI, of the UE.

Step 917. The eNB sends an RRC connection establishment message to the UE.

After receiving the RRC connection establishment request sent by the UE, the eNB determines, based on the S-TMSI of the UE, whether the context information of the UE is valid. When determining that the context information of the UE is valid for the eNB, the eNB sends the RRC connection establishment message to the UE. The RRC connection establishment message carries resumption indication information used to instruct the UE to resume data transmission by using the saved context information.

Step 918. The UE determines to send an RRC connection establishment complete message to the eNB.

The RRC connection establishment complete message carries a short MAC-I. The short MAC-I is obtained by intercepting least significant 16 bits of the MAC-I after the MAC-I is calculated by the UE by using identification information, for example, a C-RNTI or an S-TMSI, of the UE.

Step 919. The eNB sends a data transmission indication message to the UE.

The data transmission indication message includes security key information, for example, nextHopChainingCount.

Step 920. The UE updates an intermediate key KeNB based on security key information, generates K_{RRCinc} based on a new intermediate key KeNB and an integrity protection algorithm, generates K_{RRCenc} and K_{UPenc} based on an encryption algorithm, and activates the keys.

Step 921. The UE encrypts the to-be-transmitted data based on K_{UPenc} and transmits the encrypted to-be-transmitted data to the eNB.

The UE may further encrypt and apply integrity protection on a subsequent RRC control message by using the newly generated encryption and integrity protection keys K_{RRCinc} and K_{RRCenc}, and sends the subsequent RRC control message.

In the foregoing embodiments shown in FIG. 6A, FIG. 6B, FIG. 7A, FIG. 7B, FIG. 8A, FIG. 8B, FIG. 9A, and FIG. 9B, an event such as RLF and an RRC connection re-establishment process in a current LTE protocol are reused, so that data transmission can be resumed quickly, and UE implementation complexity can be reduced.

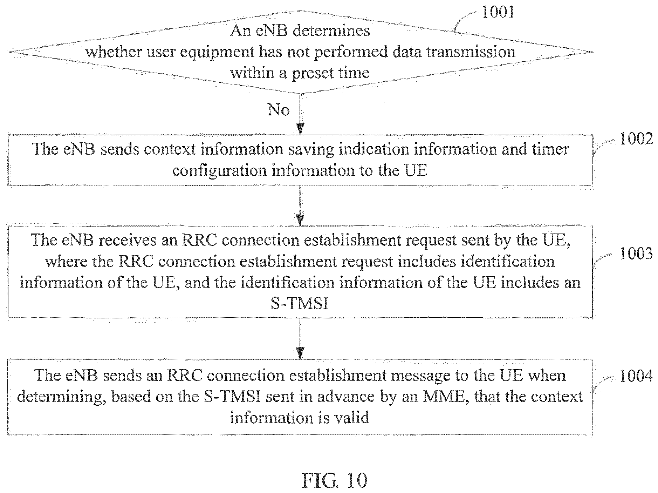

FIG. 10 is a flowchart of Embodiment 6 of a data transmission processing method according to an embodiment of the present invention. This embodiment is described from a perspective of a base station eNB. As shown in FIG. 10, the method includes the following steps.

Step 1001. The eNB determines whether user equipment has not performed data transmission within a preset time, and performs step 1002 when the user equipment has not performed data transmission within the preset time.

For a manner in which the eNB determines whether the UE has not transmitted data within a specified time, refer to the embodiment shown in FIG. 1. For example, the determining is performed when a context information saving request of the UE is received or based on a record of transmission with the UE.

Step 1002. The eNB sends context information saving indication information and timer configuration information to the UE.

The UE saves context information based on the indication information, determines that the UE is in a state related to triggering of RRC connection re-establishment or triggering of RRC connection establishment, and triggers an RRC connection re-establishment process or an RRC connection establishment process when there is uplink and/or downlink to-be-transmitted data.

The UE correspondingly configures and starts a timer based on the timer configuration information.

For a specific implementation, refer to the foregoing embodiments, and details are not repeated.

Step 1003. The eNB receives an RRC connection establishment request sent by the UE, where the RRC connection establishment request includes identification information of the UE, and the identification information of the UE includes an S-TMSI.

Step 1004. The eNB sends an RRC connection establishment message to the UE when determining, based on the S-TMSI sent in advance by an MME, that the context information is valid.

In this embodiment, the RRC connection establishment process is described from only an eNB side perspective. After receiving an RRC connection establishment request that carries the S-TMSI and that is sent by the UE, the eNB first determines, based on the S-TMSI of the UE received from the MME, whether the context information of the UE has been locally saved, that is, whether the context information of the UE is valid; and sends an RRC connection establishment message to the UE when determining that the context information of the UE is valid. The RRC connection establishment message includes resumption indication information, and the resumption indication information is used to instruct the UE to resume data transmission by using the saved context information.

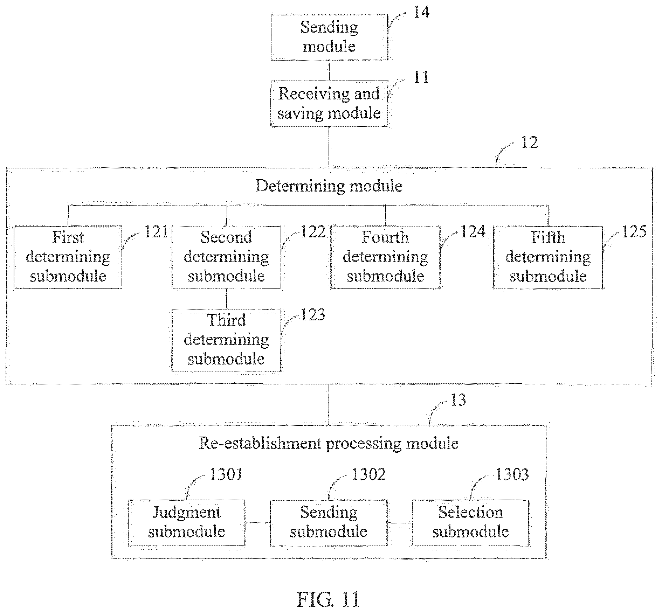

FIG. 11 is a schematic structural diagram of Embodiment 1 of user equipment according to an embodiment of the present invention. As shown in FIG. 11, the user equipment includes a receiving and saving module 11, a determining module 12, and a re-establishment processing module 13.

The receiving and saving module 11 is configured to: receive context information saving indication information sent by a base station, and save context information of the user equipment according to the context information saving indication information.

The determining module 12 is configured to determine that the user equipment is in a state related to triggering of radio resource control RRC connection re-establishment or triggering of RRC connection establishment.

The re-establishment processing module 13 is configured to: trigger an RRC connection re-establishment process or an RRC connection establishment process when the user equipment has uplink and/or downlink to-be-transmitted data, to transmit the to-be-transmitted data by using the saved context information and a re-established RRC connection or an established RRC connection.

Optionally, the user equipment further includes a sending module 14.

The sending module 14 is configured to: when it is determined that no data needs to be transmitted within a first preset time, send a context information saving request to the base station, to cause the base station to save the context information.

The context information saving indication information is sent by the base station based on the context information saving request, or is sent by the base station based on a record of data transmission with the user equipment when it is determined that no data transmission is performed with the user equipment within a second preset time. The second preset time is equal to or not equal to the first preset time.

Optionally, the determining module 12 includes a first determining submodule 121.

The first determining submodule 121 is configured to determine that the user equipment is in a radio link failure RLF state.

Optionally, the determining module 12 includes a second determining submodule 122 and a third determining submodule 123.

The second determining submodule 122 is configured to determine that the user equipment is in a state of being timing synchronized with the base station.

The third determining submodule 123 is configured to: when the user equipment has the to-be-transmitted data, determine that the user equipment is in an RLF state.

Optionally, the determining module 12 includes a fourth determining submodule 124.

The fourth determining submodule 124 is configured to: determine that the user equipment is in an RRC connection re-establishment initialization state, and perform a cell selection or re-selection process based on the RRC connection re-establishment initialization state.

Optionally, the determining module 12 includes a fifth determining submodule 125.

The fifth determining submodule 125 is configured to: determine that the user equipment is in an RRC connection establishment initialization state and perform a cell selection or re-selection process based on the RRC connection establishment initialization state, or determine that the user equipment is in a cell selection or re-selection process.

Optionally, the re-establishment processing module 13 includes a judgment submodule 1301, a sending submodule 1302, and a selection submodule 1303.

The judgment submodule 1301 is configured to determine whether a current serving cell of the user equipment meets a preset communication requirement.

The sending submodule 1302 is configured to: if the current serving cell meets the preset communication requirement, send an RRC connection re-establishment request or an RRC connection establishment request to the base station.

The selection submodule 1303 is configured to: if the current serving cell does not meet the preset communication requirement, perform a cell selection or re-selection process.

The sending submodule 1302 is further configured to send an RRC connection re-establishment request or an RRC connection establishment request to the base station when a base station corresponding to a selected cell is the base station.

Optionally, the sending submodule 1302 is further configured to:
when the user equipment has the to-be-transmitted data, send an RRC connection re-establishment request to the base station by using a selected cell.

Optionally, the sending submodule 1302 is further configured to:
when the user equipment has the to-be-transmitted data, send an RRC connection establishment request to the base station by using a selected cell.

All optional implementations of the embodiment shown in FIG. 11 may be used to implement the technical solution related to the user equipment UE in FIG. 1, or FIG. 6A to FIG. 9B. An implementation principle and a technical effect of the embodiment are similar to those of the user equipment UE in FIG. 1, or FIG. 6A to FIG. 9B, and details are not repeated herein.

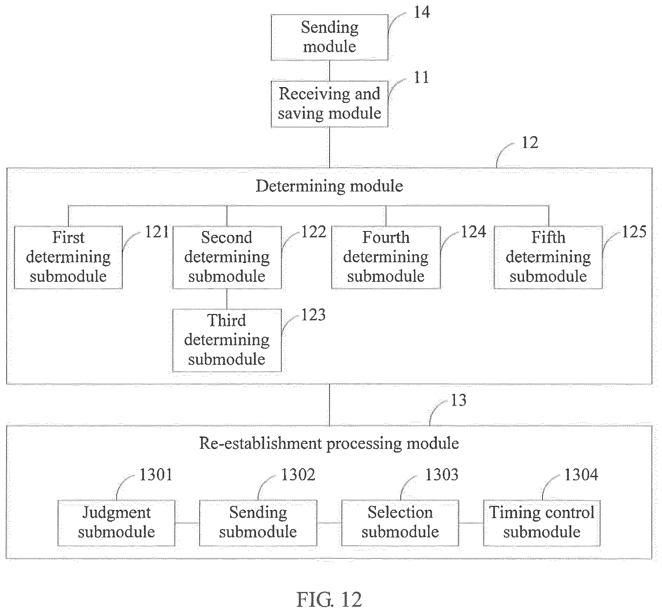

FIG. 12 is a schematic structural diagram of Embodiment 2 of user equipment according to an embodiment of the present invention. As shown in FIG. 12, the re-establishment processing module 13 includes a timing control submodule 1304.

The timing control submodule 1304 is configured to: start a first timer, and after the first timer expires, release the context information.

Optionally, the selection submodule 1303 is configured to: perform a cell selection or re-selection process within a time period corresponding to the first timer, and select a cell.

The timing control submodule 1304 is configured to: if no cell is selected within the time period corresponding to the first timer, release the context information.

Optionally, the selection submodule 1303 is specifically configured to:
start a second timer, and within an i^{th} time period corresponding to the second timer, suspend or stop the second timer if a first cell is selected; and
after the second timer is suspended or stopped, if the first cell is no longer a proper cell, reset and restart the second timer, so as to select a second cell within an (i+1-n)^{th} time period, where i is an integer ranging from 1 to n, and n is an integer greater than 1.

Optionally, the selection submodule 1303 is further configured to:
perform a cell selection or re-selection process, and if a base station corresponding to a selected cell is different from the base station that sends the context information saving indication information, or a quantity of selected-cell changes is greater than or equal to a preset quantity, determine to trigger an initial RRC connection establishment process when the user equipment has the to-be-transmitted data.

Optionally, the selection submodule 1303 is further configured to:
perform a cell selection or re-selection process, trigger execution of a location update process when it is determined that a track area of a selected cell has changed, and establish a data radio bearer with a new base station in the location update process.

The receiving and saving module 11 is further configured to:
receive, in the location update process or after location update is complete, context information saving indication information sent by the new base station.

The user equipment in the embodiment shown in FIG. 12 may be configured to implement the technical solution related to the user equipment UE in FIG. 2 or FIG. 6A to FIG. 9B. An implementation principle and a technical effect of the user equipment are similar to those of the user equipment UE in FIG. 2 or FIG. 6A to FIG. 9B, and details are not repeated herein.

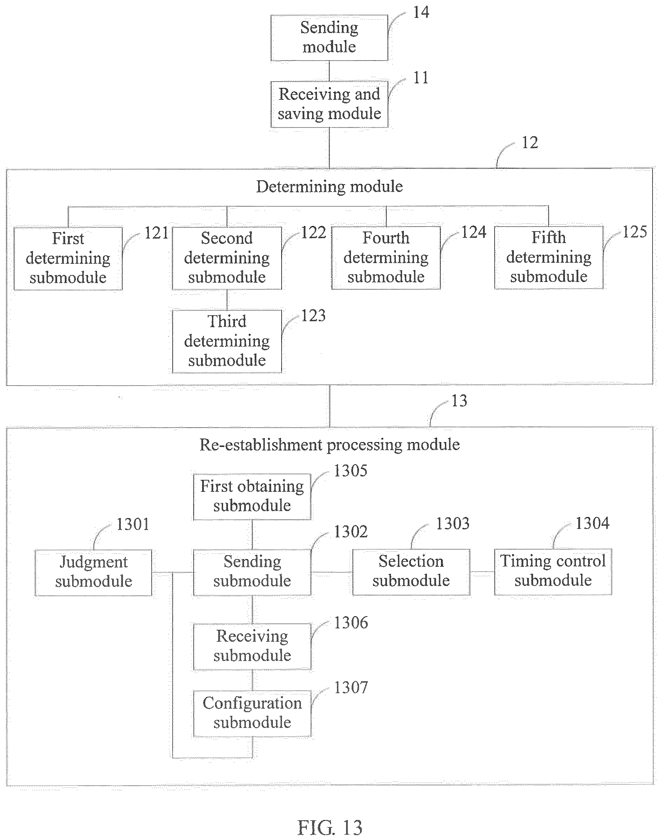

FIG. 13 is a schematic structural diagram of Embodiment 3 of user equipment according to an embodiment of the present invention. As shown in FIG. 13, optionally, the re-establishment processing module 13 includes a first obtaining submodule 1305.

The first obtaining submodule 1305 is configured to obtain uplink timing advance information and/or an uplink transmission resource.

The sending submodule 1302 is configured to: adjust uplink transmit timing based on the uplink timing advance information, and/or send an RRC connection re-establishment request to the base station by using the uplink transmission resource. The RRC connection re-establishment request includes any one of identification information of the user equipment, a short message authentication code for integrity short MAC-I, and re-establishment cause indication information, and the re-establishment cause indication information is used to instruct the user equipment to resume data transmission by using the saved context information.

Optionally, the re-establishment processing module 13 further includes a receiving submodule 1306 and a configuration submodule 1307.

The receiving submodule 1306 is configured to receive an RRC connection re-establishment message sent by the base station. The connection re-establishment message includes radio resource configuration information and security key information.

The configuration submodule 1307 is configured to: perform corresponding resource configuration based on the radio resource configuration information, and determine to restore a data radio bearer DRB.

The sending submodule 1302 is further configured to send, to the base station, an RRC connection re-establishment complete message encrypted based on the security key information. The RRC connection re-establishment complete message includes the to-be-transmitted data.

Optionally, the timing control submodule 1304 is further configured to:
if it is determined that the user equipment is in the RRC connection re-establishment initialization state, when the user equipment has the to-be-transmitted data or the user equipment sends the RRC connection re-establishment request to the base station, start a third timer, and stop the first timer and/or the second timer.

Optionally, the timing control submodule 1304 is further configured to:
if the receiving submodule receives the RRC connection re-establishment message within a time period corresponding to the third timer, stop recording time of the third timer; or
if the receiving submodule does not receive the RRC connection re-establishment message within a time period corresponding to the third timer, perform one or more of the following operations:
   entering an RRC idle state;
   stopping the first timer;
   triggering sending of an RRC connection establishment request to the base station corresponding to the selected cell; and
   triggering cell selection or re-selection, and sending an RRC connection establishment request to the base station corresponding to the selected cell.

Specifically, the first obtaining submodule 1305 includes a judgment unit, a first obtaining unit, and a second obtaining unit.

The judgment unit is configured to determine whether a current coverage level has changed.

The first obtaining unit is configured to: when the coverage level has changed,
send a random access request to the base station; and
receive a random access response message sent by the base station, where the random access response message includes the uplink timing advance information and uplink resource allocation information used to obtain the uplink transmission resource.

The second obtaining unit is configured to: when the coverage level has not changed,
obtain currently locally saved uplink timing advance information as the uplink timing advance information.

The uplink transmission resource is obtained in any one of the following manners:
sending a scheduling request resource to the base station, to obtain the uplink transmission resource;
contending for an uplink shared channel resource, to obtain the uplink transmission resource; and
obtaining a resource preconfigured for the user equipment by the base station, as the uplink transmission resource.

The judgment unit is configured to:
determine whether a current coverage level has changed, depending on whether a radio resource management RRM measurement result change amount exceeds a preset threshold.

All optional implementations of the embodiment shown in FIG. 13 may be used to implement the technical solution related to the user equipment UE in FIG. 3 and FIG. 4, or FIG. 6A to FIG. 8B. An implementation principle and a technical effect of the embodiment are similar to those of the user equipment UE in FIG. 3 and FIG. 4, or FIG. 6A to FIG. 8B, and details are not repeated herein.

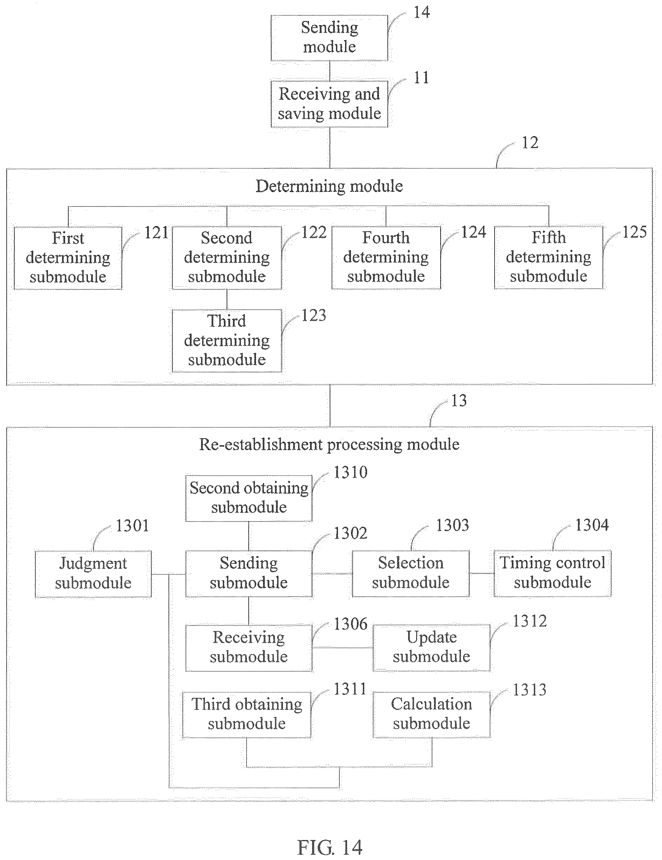

FIG. 14 is a schematic structural diagram of Embodiment 4 of user equipment according to an embodiment of the present invention. As shown in FIG. 14, the re-establishment processing module 13 includes:
a second obtaining submodule 1310, configured to obtain uplink timing advance information and/or an uplink transmission resource.

The sending submodule 1302 is further configured to: adjust uplink transmit timing based on the uplink timing advance information, and/or send an RRC connection establishment request to the base station by using the uplink transmission resource. The RRC connection establishment request includes identification information of the user equipment.

Optionally, the receiving submodule 1306 is further configured to:
receive an RRC connection establishment message sent by the base station, where the RRC connection establishment message includes resumption indication information, and the resumption indication information is used to instruct the user equipment to resume data transmission by using the saved context information.

The sending submodule 1302 is further configured to send an RRC connection establishment complete message to the base station.

Specifically, the sending submodule 1302 is further configured to send the RRC connection establishment complete message to the base station. The RRC connection establishment complete message includes a short MAC-I calculated based on the identification information of the user equipment.

Optionally, the re-establishment processing module 13 further includes a third obtaining submodule 1311.

The third obtaining submodule 1311 is configured to obtain a security key.

The sending submodule 1302 is further configured to: encrypt and/or apply integrity protection on the RRC connection establishment complete message based on the security key, and send the RRC connection establishment complete message.

Optionally, the sending submodule 1302 is further configured to: encrypt and/or apply integrity protection on the RRC connection establishment request based on the security key, and send the RRC connection establishment request.

The third obtaining submodule 1311 is specifically configured to:
obtain a security key in the context information, where the security key includes a message integrity protection key K_{RRCinc}, a message encryption key K_{RRCenc}, and a data encryption key K_{UPenc}.

Further, the receiving submodule 1306 is further configured to receive security key indication information sent by the base station. The security key indication information includes security key update information.

Correspondingly, the re-establishment processing module 13 further includes an update submodule 1312 and a calculation submodule 1313.

The update submodule 1312 is configured to update an intermediate key KeNB based on the security key update information.

The calculation submodule 1313 is configured to: generate a message integrity protection key K_{RRCinc} based on an updated intermediate key KeNB and an integrity protection algorithm, and generate a message encryption key K_{RRCenc} and a data encryption key K_{UPenc} based on the updated intermediate key KeNB and an encryption algorithm.

The security key indication information is carried in any one of the following messages: a key update indication message, a data transmission indication message, an RRC connection establishment message, and a message carrying the UE context saving indication information.

Specifically, the second obtaining submodule 1310 includes a judgment unit, a first obtaining unit, and a second obtaining unit.

The judgment unit is configured to determine whether a current coverage level has changed.

The first obtaining unit is configured to: when the coverage level has changed,
send a random access request to the base station; and
receive a random access response message sent by the base station, where the random access response message includes the uplink timing advance information and uplink resource allocation information used to obtain the uplink transmission resource.

The second obtaining unit is configured to: when the coverage level has not changed,
obtain currently locally saved uplink timing advance information as the uplink timing advance information.

the uplink transmission resource is obtained in any one of the following manners:
sending a scheduling request resource to the base station, to obtain the uplink transmission resource;
contending for an uplink shared channel resource, to obtain the uplink transmission resource; and
obtaining a resource preconfigured for the user equipment by the base station, as the uplink transmission resource.

Specifically, the judgment unit is configured to:
determine whether a current coverage level has changed, depending on whether a radio resource management RRM measurement result change amount exceeds a preset threshold.

All optional implementations of the embodiment shown in FIG. 14 may be used to implement the technical solution related to the user equipment UE in FIG. 5 or FIG. 9A and FIG. 9B. An implementation principle and a technical effect of the embodiment are similar to those of the user equipment UE in either FIG. 5 or FIG. 9A and FIG. 9B, and details are not repeated herein.

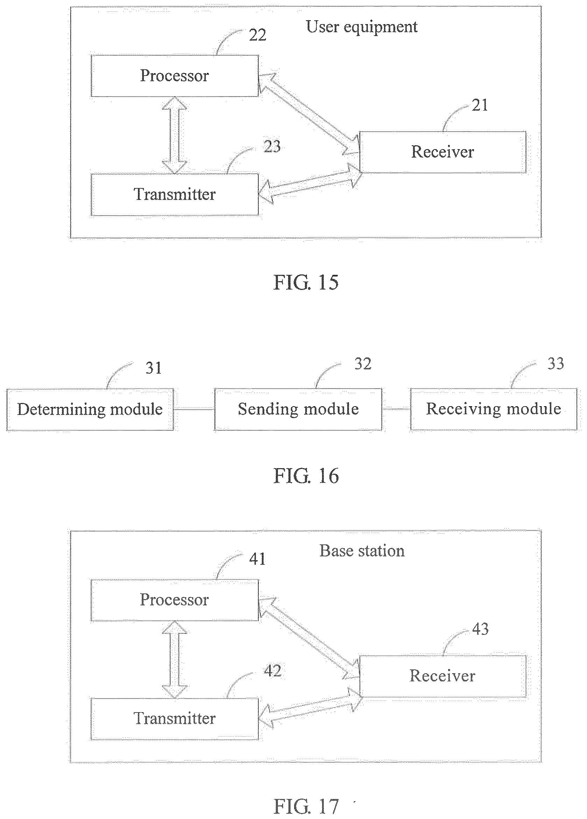

FIG. 15 is a schematic structural diagram of Embodiment 5 of user equipment according to an embodiment of the present invention. As shown in FIG. 16, the user equipment includes a receiver 21, a processor 22, and a transmitter 23.

The receiver 21 is configured to: receive context information saving indication information sent by a base station, and save context information of the user equipment according to the context information saving indication information.

The processor 22 is configured to determine that the user equipment is in a state related to triggering of radio resource control RRC connection re-establishment or triggering of RRC connection establishment.

The processor 22 is configured to: trigger an RRC connection re-establishment process or an RRC connection establishment process when the user equipment has uplink and/or downlink to-be-transmitted data, to transmit the to-be-transmitted data by using the saved context information and a re-established RRC connection or an established RRC connection.

Optionally, the processor 22 is further configured to determine that the user equipment is in a radio link failure RLF state.

Optionally, the processor 22 is further configured to: determine that the user equipment is in a state of being timing synchronized with the base station; and
when the user equipment has the to-be-transmitted data, determine that the user equipment is in an RLF state.

Optionally, the processor 22 is further configured to: determine that the user equipment is in an RRC connection re-establishment initialization state, and perform a cell selection or re-selection process based on the RRC connection re-establishment initialization state.

Optionally, the processor 22 is further configured to: determine that the user equipment is in an RRC connection establishment initialization state and perform a cell selection or re-selection process based on the RRC connection establishment initialization state, or determine that the user equipment is in a cell selection or re-selection process.

Optionally, the processor 22 is further configured to determine whether a current serving cell of the user equipment meets a preset communication requirement.

The user equipment further includes a transmitter 23.

The transmitter 23 is configured to: if the current serving cell meets the preset communication requirement, send an RRC connection re-establishment request or an RRC connection establishment request to the base station.

The processor 22 is further configured to: if the current serving cell does not meet the preset communication requirement, perform a cell selection or re-selection process.

The transmitter 23 is further configured to send an RRC connection re-establishment request or an RRC connection establishment request to the base station when a base station corresponding to a selected cell is the base station.

Optionally, the transmitter 23 is further configured to:
when the user equipment has the to-be-transmitted data, send an RRC connection re-establishment request to the base station by using a selected cell.

Optionally, the transmitter 23 is further configured to: when the user equipment has the to-be-transmitted data, send an RRC connection establishment request to the base station by using a selected cell.

Further, the processor 22 is further configured to: start a first timer, and after the first timer expires, release the context information.

Further, the processor 22 is further configured to: perform a cell selection or re-selection process within a time period corresponding to the first timer, and select a cell; and release the context information if no cell is selected within the time period corresponding to the first timer to establish or re-establish an RRC connection.

Further, the processor 22 is further configured to:
start a second timer, and within an i^{th} time period corresponding to the second timer, suspend or stop the second timer if a first cell is selected; and
after the second timer is suspended or stopped, if the first cell is no longer a proper cell, reset and restart the second timer, so as to select a second cell within an (i+1-n)^{th} time period, where i is an integer ranging from 1 to n, and n is an integer greater than 1.

Further, the processor 22 is further configured to:
obtain uplink timing advance information and/or an uplink transmission resource.

The transmitter 23 is further configured to: adjust uplink transmit timing based on the uplink timing advance information, and/or send an RRC connection re-establishment request to the base station by using the uplink transmission resource. The RRC connection re-establishment request includes any one of identification information of the user equipment, a short message authentication code for integrity short MAC-I, and re-establishment cause indication information, and the re-establishment cause indication information is used to instruct the user equipment to resume data transmission by using the saved context information.

Further, the receiver 21 is further configured to receive an RRC connection re-establishment message sent by the base station. The connection re-establishment message includes radio resource configuration information and security key information.

The processor 22 is further configured to: perform corresponding resource configuration based on the radio resource configuration information, and determine to restore a data radio bearer DRB.

Further, the transmitter 23 is further configured to send, to the base station, an RRC connection re-establishment complete message encrypted based on the security key information. The RRC connection re-establishment complete message includes the to-be-transmitted data.

The transmitter 23 is further configured to send, to the base station, an RRC connection re-establishment complete message encrypted based on the security key information. The RRC connection re-establishment complete message includes the to-be-transmitted data.

Further, the processor 22 is further configured to:
if it is determined that the user equipment is in the RRC connection re-establishment initialization state, when the user equipment has the to-be-transmitted data or the user equipment sends the RRC connection re-establishment request to the base station, start a third timer, and stop the first timer and/or the second timer.

Further, the processor 22 is further configured to:
if the receiving submodule receives the RRC connection re-establishment message within a time period corresponding to the third timer, stop recording time of the third timer; or
if the receiving submodule does not receive the RRC connection re-establishment message within a time period corresponding to the third timer, perform one or more of the following operations:
   entering an RRC idle state;
   stopping the first timer;
   triggering sending of an RRC connection establishment request to the base station corresponding to the selected cell; and
   triggering cell selection or re-selection, and sending an RRC connection establishment request to the base station corresponding to the selected cell.

Further, the processor 22 is further configured to:
obtain uplink timing advance information and/or an uplink transmission resource.

The transmitter 23 is further configured to: adjust uplink transmit timing based on the uplink timing advance information, and/or send an RRC connection establishment request to the base station by using the uplink transmission resource. The RRC connection establishment request includes identification information of the user equipment.

Further, the receiver 21 is further configured to:
receive an RRC connection establishment message sent by the base station, where the RRC connection establishment message includes resumption indication information, and the resumption indication information is used to instruct the user equipment to resume data transmission by using the saved context information.

The transmitter 23 is further configured to send an RRC connection establishment complete message to the base station.

Further, the transmitter 23 is further configured to send the RRC connection establishment complete message to the base station. The RRC connection establishment complete message includes a short MAC-I calculated based on the identification information of the user equipment.

The processor 22 is further configured to obtain a security key.

The transmitter 23 is further configured to: encrypt and/or apply integrity protection on the RRC connection establishment complete message based on the security key, and send the RRC connection establishment complete message.

Further, the transmitter 23 is further configured to: encrypt and/or apply integrity protection on the RRC connection establishment request based on the security key, and send the RRC connection establishment request.

Further, the processor 22 is further configured to obtain a security key in the context information. The security key includes a message integrity protection key K_{RRCinc}, a message encryption key K_{RRCenc}, and a data encryption key K_{UPenc}.

The receiver 21 is further configured to receive security key indication information sent by the base station. The security key indication information includes security key update information.

The processor 22 is further configured to:
update an intermediate key KeNB based on the security key update information; and
generate a message integrity protection key K_{RRCinc} based on an updated intermediate key KeNB and an integrity protection algorithm, and generate a message encryption key K_{RRCenc} and a data encryption key K_{UPenc} based on the updated intermediate key KeNB and an encryption algorithm.

The security key indication information is carried in any one of the following messages: a key update indication message, a data transmission indication message, an RRC connection establishment message, and a message carrying the UE context saving indication information.

Further, the processor 22 is further configured to:
determine whether a current coverage level has changed.

The transmitter 23 is further configured to send a random access request to the base station when the coverage level has changed.

The receiver 21 is further configured to receive a random access response message sent by the base station. The random access response message includes the uplink timing advance information and uplink resource allocation information used to obtain the uplink transmission resource.

The transmitter 23 is further configured to: when the coverage level has not changed, obtain currently locally saved uplink timing advance information as the uplink timing advance information.

The processor 22 is further configured to obtain the uplink transmission resource in any one of the following manners:
sending a scheduling request resource to the base station, to obtain the uplink transmission resource;
contending for an uplink shared channel resource, to obtain the uplink transmission resource; and
obtaining a resource preconfigured for the user equipment by the base station, as the uplink transmission resource.

Further, the processor 22 is further configured to:
determine whether a current coverage level has changed, depending on whether a radio resource management RRM measurement result change amount exceeds a preset threshold.

The transmitter 23 is further configured to: when it is determined that no data needs to be transmitted within a first preset time, send a context information saving request to the base station, to cause the base station to save the context information.

Specifically, the context information saving indication information is sent by the base station based on the context information saving request, or is sent by the base station based on a record of data transmission with the user equipment when it is determined that no data transmission is performed with the user equipment within a second preset time. The second preset time is equal to or not equal to the first preset time.

Further, the receiver 21 is further configured to receive configuration information of a fourth timer sent by the base station. The fourth timer is configured to time validity of a security key in the context information.

Specifically, the context information saving indication information is included in any one of the following indication messages:
a context information saving indication message, an RRC connection suspension indication message, and an RRC connection release indication message.

Further, the processor 22 is further configured to:
perform a cell selection or re-selection process, and if a base station corresponding to a selected cell is different from the base station that sends the context information saving indication information, or a quantity of selected-cell changes is greater than or equal to a preset quantity, determine to trigger an initial RRC connection establishment process when the user equipment has the to-be-transmitted data.

Further, the processor 22 is further configured to: perform a cell selection or re-selection process, trigger execution of a location update process when it is determined that a track area of a selected cell has changed, and establish a data radio bearer with a new base station in the location update process.

Further, the receiver 21 is further configured to receive, in the location update process or after location update is complete, context information saving indication information sent by the new base station.

The user equipment provided in this embodiment is configured to implement the technical solutions related to the user equipment in the foregoing embodiments. An implementation principle and a technical effect of the user equipment are similar to those of the user equipment in the foregoing embodiments, and details are not repeated herein.

FIG. 16 is a schematic structural diagram of Embodiment 1 of a base station according to an embodiment of the present invention. As shown in FIG. 16, the base station includes a determining module 31 and a sending module 32.

The determining module 31 is configured to determine whether user equipment has not performed data transmission within a preset time.

The sending module 32 is configured to: when the determining module determines that the user equipment has not performed data transmission within the preset time, send context information saving indication information to the user equipment, so that the user equipment saves context information; determine that the user equipment is in a state related to triggering of RRC connection re-establishment or triggering of RRC connection establishment; and when there is uplink and/or downlink to-be-transmitted data, trigger an RRC connection re-establishment process or an RRC connection establishment process.

Optionally, the sending module 32 is further configured to:
send timer configuration information to the user equipment when the determining module determines that the user equipment has not performed data transmission within the preset time, where the timer configuration information includes timer configuration information indicating validity of a security key in the context information and timer configuration information indicating validity of the context information.

Further, the base station further includes a receiving module 33.

The receiving module 33 is configured to receive an RRC connection establishment request sent by the user equipment, where the RRC connection establishment request includes identification information of the user equipment, and the identification information of the user equipment includes an S-TMSI.

The sending module 32 is further configured to send an RRC connection establishment message to the user equipment when the determining module determines, based on the S-TMSI sent in advance by a mobility management entity MME, that the context information is valid. The RRC connection establishment message includes resumption indication information, and the resumption indication information is used to instruct the user equipment to resume data transmission by using the saved context information.

The base station provided in this embodiment is configured to implement the technical solution of the embodiment shown in FIG. 10. An implementation principle and a technical effect of the base station are similar to those of the embodiment shown in FIG. 10, and details are not repeated.

FIG. 17 is a schematic structural diagram of Embodiment 2 of a base station according to an embodiment of the present invention. As shown in FIG. 17, the base station includes:
a processor 41, configured to determine whether user equipment has not performed data transmission within a preset time; and
a transmitter 42, configured to: when the determining module determines that the user equipment has not performed data transmission within the preset time, send context information saving indication information to the user equipment, so that the user equipment saves context information; determine that the user equipment is in a state related to triggering of RRC connection re-establishment or triggering of RRC connection establishment; and when there is uplink and/or downlink to-be-transmitted data, trigger an RRC connection re-establishment process or an RRC connection establishment process.

Optionally, the transmitter 42 is further configured to:
send timer configuration information to the user equipment when the determining module determines that the user equipment has not performed data transmission within the preset time, where the timer configuration information includes timer configuration information indicating validity of a security key in the context information and timer configuration information indicating validity of the context information.

Further, the base station further includes:
a receiver 43, configured to receive an RRC connection establishment request sent by the user equipment, where the RRC connection establishment request includes identification information of the user equipment, and the identification information of the user equipment includes an S-TMSI.

The transmitter 42 is further configured to send an RRC connection establishment message to the user equipment when the determining module determines, based on the S-TMSI sent in advance by a mobility management entity MME, that the context information is valid. The RRC connection establishment message includes resumption indication information, and the resumption indication information is used to instruct the user equipment to resume data transmission by using the saved context information.

The base station provided in this embodiment is configured to implement the technical solution of the embodiment shown in FIG. 10. An implementation principle and a technical effect of the base station are similar to those of the embodiment shown in FIG. 10, and details are not repeated.

It should be understood that in the foregoing user equipment and base station embodiments, the processor may be a central processing unit (English: Central Processing Unit, CPU for short), or may be another general purpose processor, a digital signal processor (English: Digital Signal Processor, DSP for short), an application specific integrated circuit (English: Application Specific Integrated Circuit, ASIC for short), or the like. The general purpose processor may be a microprocessor, or the processor may be any normal processor, or the like. The steps of the method disclosed with reference to the embodiments of the present invention may be directly performed by a hardware processor, or may be performed by using a combination of hardware in the processor and a software module.

Persons of ordinary skill in the art may understand that all or some of the steps of the method embodiments may be implemented by a program instructing relevant hardware. The program may be saved in a computer-readable storage medium. When the program is executed, the steps of the methods in the embodiments are performed. The storage medium includes: a read-only memory (English: read-only memory, ROM for short), a RAM, a flash memory, a hard disk, a solid state disk, a magnetic tape (English: magnetic tape), a floppy disk (English: floppy disk), an optical disc (English: optical disc), and any combination thereof. Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data transmission processing method, applied to user equipment served by a base station, comprising:
receiving context information saving indication information sent by the base station, and saving context information of the user equipment according to the context information saving indication information;
determining that the user equipment is in a state related to triggering of radio resource control RRC connection re-establishment or triggering of RRC connection establishment; and
triggering an RRC connection re-establishment process or an RRC connection establishment process when the user equipment has uplink and/or downlink to-be-transmitted data, and transmitting the to-be-transmitted data on a re-established RRC connection or an established RRC connection by using the saved context information.

2. The method according to claim 1, wherein the determining that the user equipment is in a state related to triggering of radio resource control RRC connection re-establishment or triggering of RRC connection establishment comprises:
determining that the user equipment is in a radio link failure RLF state.

3. The method according to claim 1, wherein the determining that the user equipment is in a state related to triggering of radio resource control RRC connection re-establishment or triggering of RRC connection establishment comprises:
determining that the user equipment is in a state of being timing synchronized with the base station; and
when the user equipment has the to-be-transmitted data, determining that the user equipment is in an RLF state.

4. The method according to claim 1, wherein the determining that the user equipment is in a state related to triggering of radio resource control RRC connection re-establishment or triggering of RRC connection establishment comprises:
determining that the user equipment is in an RRC connection re-establishment initialization state and performing a cell selection or re-selection process based on the RRC connection re-establishment initialization state.

5. The method according to claim 1, wherein the determining that the user equipment is in a state related to triggering of radio resource control RRC connection re-establishment or triggering of RRC connection establishment comprises:
determining that the user equipment is in an RRC connection establishment initialization state and performing a cell selection or re-selection process based on the RRC connection establishment initialization state, or determining that the user equipment is in a cell selection or re-selection process.

6. The method according to claim 2 or 3, wherein the triggering an RRC connection re-establishment process or an RRC connection establishment process when the user equipment has uplink and/or downlink to-be-transmitted data comprises:
determining whether a current serving cell of the user equipment meets a preset communication requirement; and
if the current serving cell meets the preset communication requirement, when the user equipment has the to-be-transmitted data, sending an RRC connection re-establishment request or an RRC connection establishment request to the base station by using the current serving cell; or
if the current serving cell does not meet the preset communication requirement, performing a cell selection or re-selection process, and when a base station corresponding to a selected cell is the base station and the user equipment has the to-be-transmitted data, sending an RRC connection re-establishment request or an RRC connection establishment request to the base station by using the selected cell.

7. The method according to claim 4, wherein the triggering an RRC connection re-establishment process or an RRC connection establishment process when the user equipment has uplink and/or downlink to-be-transmitted data comprises:
when the user equipment has the to-be-transmitted data, sending an RRC connection re-establishment request to the base station by using a selected cell.

8. The method according to claim 5, wherein the triggering an RRC connection re-establishment process or an RRC connection establishment process when the user equipment has uplink and/or downlink to-be-transmitted data comprises:
when the user equipment has the to-be-transmitted data, sending an RRC connection establishment request to the base station by using a selected cell.

9. The method according to any one of claims 1 to 8, wherein before the triggering an RRC connection re-establishment process or an RRC connection establishment process when the user equipment has uplink and/or downlink to-be-transmitted data, the method further comprises:
starting a first timer, and after the first timer expires, releasing the context information.

10. The method according to claim 9, wherein the starting a first timer, and after the first timer expires, releasing the context information comprises:
performing a cell selection or re-selection process within a time period corresponding to the first timer, and selecting a cell; and
if no cell is selected within the time period corresponding to the first timer, releasing the context information.

11. The method according to any one of claims 4 to 10, wherein the performing a cell selection or re-selection process comprises:
starting a second timer, and within an i^{th} time period corresponding to the second timer, suspending or stopping the second timer if a first cell is selected; and
after the second timer is suspended or stopped, if the first cell is no longer a proper cell, resetting and restarting the second timer, so as to select a second cell within an (i+1-n)^{th} time period, wherein i is an integer ranging from 1 to n, and n is an integer greater than 1.

12. The method according to any one of claims 1 to 11, wherein the triggering an RRC connection re-establishment process or an RRC connection establishment process when the user equipment has uplink and/or downlink to-be-transmitted data comprises:
obtaining uplink timing advance information and/or an uplink transmission resource; and
adjusting uplink transmit timing based on the uplink timing advance information, and/or sending an RRC connection re-establishment request to the base station by using the uplink transmission resource, wherein the RRC connection re-establishment request comprises any one of identification information of the user equipment, a short message authentication code for integrity short MAC-I, and re-establishment cause indication information, and the re-establishment cause indication information is used to instruct the user equipment to resume data transmission by using the saved context information.

13. The method according to claim 12, wherein the method further comprises:
receiving an RRC connection re-establishment message sent by the base station, wherein the connection re-establishment message comprises radio resource configuration information and security key information; and
performing corresponding resource configuration based on the radio resource configuration information, and determining to restore a data radio bearer DRB.

14. The method according to claim 13, wherein the method further comprises:
sending, to the base station, an RRC connection re-establishment complete message encrypted based on the security key information, wherein the RRC connection re-establishment complete message comprises the to-be-transmitted data.

15. The method according to any one of claims 4 to 14, wherein the method further comprises:
if it is determined that the user equipment is in the RRC connection re-establishment initialization state, when the user equipment has the to-be-transmitted data or the user equipment sends the RRC connection re-establishment request to the base station, starting a third timer, and stopping the first timer and/or the second timer.

16. The method according to claim 15, wherein the method further comprises:
if the RRC connection re-establishment message is received within a time period corresponding to the third timer, stopping recording time of the third timer; or
if the RRC connection re-establishment message is not received within a time period corresponding to the third timer, performing one or more of the following operations:
entering an RRC idle state;
stopping the first timer;
triggering sending of an RRC connection establishment request to the base station corresponding to the selected cell; and
triggering cell selection or re-selection, and sending an RRC connection establishment request to the base station corresponding to the selected cell.

17. The method according to any one of claims 1 to 11, wherein the triggering an RRC connection establishment process when the user equipment has uplink and/or downlink to-be-transmitted data comprises:
obtaining uplink timing advance information and/or an uplink transmission resource; and
adjusting uplink transmit timing based on the uplink timing advance information, and/or sending an RRC connection establishment request to the base station by using the uplink transmission resource, wherein the RRC connection establishment request comprises identification information of the user equipment.

18. The method according to claim 17, wherein the method further comprises:
receiving an RRC connection establishment message sent by the base station, wherein the RRC connection establishment message comprises resumption indication information, and the resumption indication information is used to instruct the user equipment to resume data transmission by using the saved context information; and
sending an RRC connection establishment complete message to the base station.

19. The method according to claim 18, wherein the sending an RRC connection establishment complete message to the base station comprises:
sending the RRC connection establishment complete message to the base station, wherein the RRC connection establishment complete message comprises a short MAC-I calculated based on the identification information of the user equipment;
and/or
obtaining a security key; and
encrypting and/or applying integrity protection on the RRC connection establishment complete message based on the security key, and sending the RRC connection establishment complete message.

20. The method according to claim 17, wherein the sending an RRC connection establishment request to the base station comprises:
obtaining a security key; and
encrypting and/or applying integrity protection on the RRC connection establishment request based on the security key, and sending the RRC connection establishment request.

21. The method according to claim 19 or 20, wherein the obtaining a security key comprises:
obtaining a security key in the context information, wherein the security key comprises a message integrity protection key K_{RRCinc}, a message encryption key K_{RRCenc}, and a data encryption key K_{UPenc};
or
the obtaining a security key comprises:
receiving security key indication information sent by the base station, wherein the security key indication information comprises security key update information; and
updating an intermediate key KeNB based on the security key update information, generating a message integrity protection key K_{RRCinc} based on an updated intermediate key KeNB and an integrity protection algorithm, and generating a message encryption key K_{RRCenc} and a data encryption key K_{UPenc} based on the updated intermediate key KeNB and an encryption algorithm, wherein
the security key indication information is carried in any one of the following messages: a key update indication message, a data transmission indication message, an RRC connection establishment message, and a message carrying the context saving indication information of the UE.

22. The method according to claim 12 or 17, wherein the obtaining uplink timing advance information and/or an uplink transmission resource comprises:
determining whether a current coverage level has changed; and
when the coverage level has changed,
sending a random access request to the base station; and
receiving a random access response message sent by the base station, wherein the random access response message comprises the uplink timing advance information and uplink resource allocation information used to obtain the uplink transmission resource.

23. The method according to claim 22, wherein the method further comprises: when the coverage level has not changed,
obtaining currently locally saved uplink timing advance information as the uplink timing advance information, wherein
the uplink transmission resource is obtained in any one of the following manners:
sending a scheduling request resource to the base station, to obtain the uplink transmission resource;
contending for an uplink shared channel resource, to obtain the uplink transmission resource; and
obtaining a resource preconfigured for the user equipment by the base station, as the uplink transmission resource.

24. The method according to any one of claims 1 to 23, wherein the method further comprises:
when it is determined that no data needs to be transmitted within a first preset time, sending a context information saving request to the base station, to cause the base station to save the context information.

25. The method according to any one of claims 1 to 24, wherein the context information saving indication information is sent by the base station based on the context information saving request, or is sent by the base station based on a record of data transmission with the user equipment when it is determined that no data transmission is performed with the user equipment within a second preset time. The second preset time is equal to or not equal to the first preset time.

26. The method according to any one of claims 1 to 25, further comprising:
receiving configuration information of a fourth timer sent by the base station, wherein the fourth timer is configured to time validity of a security key in the context information; and
starting the fourth timer when the context information saving indication information is received.

27. The method according to any one of claims 1 to 26, wherein the context information saving indication information is comprised in any one of the following indication messages:
a context information saving indication message, an RRC connection suspension indication message, and an RRC connection release indication message.

28. The method according to any one of claims 1 to 27, wherein before the triggering an RRC connection re-establishment process or an RRC connection establishment process when the user equipment has uplink and/or downlink to-be-transmitted data, the method further comprises:
performing a cell selection or re-selection process, and if a base station for a selected cell is different from the base station that sends the context information saving indication information, or a quantity of selected-cell changes is greater than or equal to a preset quantity, determining to trigger an initial RRC connection establishment process when the user equipment has the to-be-transmitted data.

29. The method according to any one of claims 1 to 28, wherein before the triggering an RRC connection re-establishment process or an RRC connection establishment process when the user equipment has uplink and/or downlink to-be-transmitted data, the method further comprises:
performing a cell selection or re-selection process, triggering execution of a location update process when it is determined that a track area of a selected cell has changed, and establishing a data radio bearer with a new base station in the location update process.

30. The method according to claim 29, wherein the method further comprises:
receiving, in the location update process or after location update is complete, context information saving indication information sent by the new base station.

31. A data transmission processing method, comprising:
determining whether user equipment has not performed data transmission within a preset time; and
sending context information saving indication information to the user equipment when the user equipment has not performed data transmission within the preset time, so that the user equipment saves context information; determining that the user equipment is in a state related to triggering of RRC connection re-establishment or triggering of RRC connection establishment; and triggering an RRC connection re-establishment process or an RRC connection establishment process when there is uplink and/or downlink to-be-transmitted data.

32. The method according to claim 31, wherein the method further comprises:
sending timer configuration information to the user equipment when the user equipment has not performed data transmission within the preset time, wherein the timer configuration information comprises timer configuration information indicating validity of a security key in the context information and timer configuration information indicating validity of the context information.

33. The method according to claim 31, wherein the method further comprises:
receiving an RRC connection establishment request sent by the user equipment, wherein the RRC connection establishment request comprises identification information of the user equipment, and the identification information of the user equipment comprises an S-TMSI; and
sending an RRC connection establishment message to the user equipment when it is determined, based on the S-TMSI sent in advance by a mobility management entity MME, that the context information is valid, wherein the RRC connection establishment message comprises resumption indication information, and the resumption indication information is used to instruct the user equipment to resume data transmission by using the saved context information.

34. User equipment, comprising:
a receiver, configured to: receive context information saving indication information sent by a base station, and save context information of the user equipment according to the context information saving indication information; and
a processor, configured to determine that the user equipment is in a state related to triggering of radio resource control RRC connection re-establishment or triggering of RRC connection establishment, wherein
the processor is further configured to: trigger an RRC connection re-establishment process or an RRC connection establishment process when the user equipment has uplink and/or downlink to-be-transmitted data, to transmit the to-be-transmitted data by using the saved context information and a re-established RRC connection or an established RRC connection.

35. The user equipment according to claim 34, wherein the processor is further configured to determine that the user equipment is in a radio link failure RLF state.

36. The user equipment according to claim 34, wherein the processor is further configured to: determine that the user equipment is in a state of being timing synchronized with the base station; and
when the user equipment has the to-be-transmitted data, determine that the user equipment is in an RLF state.

37. The user equipment according to claim 34, wherein the processor is further configured to: determine that the user equipment is in an RRC connection re-establishment initialization state, and perform a cell selection or re-selection process based on the RRC connection re-establishment initialization state.

38. The user equipment according to claim 34, wherein the processor is further configured to: determine that the user equipment is in an RRC connection establishment initialization state and perform a cell selection or re-selection process based on the RRC connection establishment initialization state, or determine that the user equipment is in a cell selection or re-selection process.

39. The user equipment according to any one of claims 35 to 38, wherein the processor is further configured to determine whether a current serving cell of the user equipment meets a preset communication requirement; and
the user equipment further comprises:
a transmitter, configured to: if the current serving cell meets the preset communication requirement, send an RRC connection re-establishment request or an RRC connection establishment request to the base station;
the processor is further configured to: if the current serving cell does not meet the preset communication requirement, perform a cell selection or re-selection process; and
the transmitter is further configured to send an RRC connection re-establishment request or an RRC connection establishment request to the base station when a base station corresponding to a selected cell is the base station.

40. A base station, comprising:
a processor, configured to determine whether user equipment has not performed data transmission within a preset time; and
a transmitter, configured to: when the determining module determines that the user equipment has not performed data transmission within the preset time, send context information saving indication information to the user equipment, so that the user equipment saves context information; determine that the user equipment is in a state related to triggering of RRC connection re-establishment or triggering of RRC connection establishment; and when there is uplink and/or downlink to-be-transmitted data, trigger an RRC connection re-establishment process or an RRC connection establishment process.
